# FASCICULE DE BREVET EUROPEEN

(11) **EP 1 969 403 B1**
(45) Date de publication et mention de la délivrance du brevet: **09.06.2010**
(21) Numéro de dépôt: 06847220.8
(22) Date de dépôt: 27.12.2006
(51) Int. Cl.: G02B 6/00

(54) **STRUCTURE LUMINEUSE COMPORTANT AU MOINS UNE DIODE ELECTROLUMINESCENTE, SA FABRICATION ET SES APPLICATIONS**
LEUCHTSTRUKTUR MIT MINDESTENS EINER LEUCHTDIODE, IHRE HERSTELLUNG UND IHRE ANWENDUNGEN
LUMINOUS STRUCTURE COMPRISING AT LEAST ONE LIGHT-EMITTING DIODE, ITS MANUFACTURE AND ITS APPLICATIONS

(30) Priorité: 29.12.2005 FR 0513446
(43) Date de publication de la demande: 17.09.2008
(73) Titulaire: SAINT-GOBAIN GLASS FRANCE, 92400 Courbevoie (FR)
(72) Inventeur: JOUSSE, Didier, F-95150 Taverny (FR); NUGUE, Jean-Clément, F-60260 Lamorlaye (FR)
(74) Mandataire: Cardin, Elise
(86) Numéro de dépôt international: PCT/FR2006/051431
(87) Numéro de publication internationale: WO 2007/074318

(56) Documents cités:
- US-A1- 2002 001 192
- US-A1- 2004 070 989

## Description

La présente invention concerne une structure lumineuse et en particulier une structure lumineuse comportant au moins une première diode électroluminescente, le procédé de fabrication de cette structure et ses applications.

Il existe diverses structures planes éclairantes incorporant une pluralité de diodes électroluminescentes dites couramment DEL (ou LED en anglais).

On connaît d'abord des structures lumineuses à éclairage direct. Dans une première configuration connue, les diodes électroluminescentes sont disposées sur une face principale d'un verre plan monolithique porteur d'électrodes transparentes, les électrodes étant reliées aux contacts électriques des diodes par des fils soudés. Dans une deuxième configuration connue, les diodes sont assemblées sur un circuit imprimé (PCB en anglais) en plastique qui est intercalé dans un verre feuilleté.

On connaît par ailleurs des structures lumineuses à éclairage par la tranche. Elles comportent une pluralité de diodes électroluminescentes logées dans une rainure à profil concave pratiquée dans la tranche d'un verre plan. Les diodes sont assemblées sur un support plan, en époxy, parallèle à la tranche. US 2004/070989 décrit le préambule de la revendication 1.

La demanderesse a constaté que ces structures lumineuses de l'art antérieur présentent au moins l'un des inconvénients suivants :
- manque de compacité, notamment problème d'encombrement,
- complexité de la conception (nombre et forme des pièces, nombre et d'étapes de fabrication, difficultés de réalisation)
- risque de casse ou d'endommagement des diodes et/ou des éléments de connexion électrique
- problèmes d'échauffement des diodes et de sensibilité des diodes à la température (ce qui réduit la durée de vie des diodes et/ou leur fiabilité) ou à l'humidité ou à tout autre facteur corrosif.

La présente invention vise une structure lumineuse à diode(s) électroluminescente(s) - à éclairage direct et/ou par la tranche- à la fois fiable, de conception simple et la plus compacte et/ou légère possible.

La présente invention vise ainsi une structure lumineuse à diode(s) électroluminescente(s) satisfaisant aux exigences industrielles (en termes de rendement, donc de coût, de cadence, d'automatisation...), rendant ainsi possible une production 'bas coût' sans sacrifier les performances.

L'invention se propose aussi d'élargir la gamme des produits disponibles, produits dotés de nouvelles fonctionnalités et/ou ou dédiés à de nouvelles applications.

A cet effet, la présente invention propose une structure lumineuse comportant :
- au moins une diode électroluminescente, apte à émettre un rayonnement compris dans l'ultraviolet, dit UV, et/ou le visible,
- un élément verrier sensiblement plan, présentant des faces principales et une tranche et comprenant un trou logeant la diode,
- un élément métallique relié à la diode et couplé avec ledit élément verrier pour une évacuation de la chaleur,
ledit élément métallique étant en outre choisi parmi un élément de connexion électrique et/ou un élément de maintien de la diode dans ledit trou.

Ainsi la présente invention propose une structure lumineuse à diode électroluminescente de conception simple, compacte, robuste et avec une bonne tenue thermique.

La structure lumineuse peut être de grande dimension. Par exemple, les faces principales sont de surface d'au moins 1 m².

L'élément métallique peut être, entièrement ou en partie, en contact direct avec au moins l'une des faces principales et/ou avec la tranche et/ou avec la ou les parois latérales formant le trou.

L'élément métallique peut aussi être, entièrement ou en partie, en contact indirect avec au moins l'une des faces principales et/ou avec la tranche et/ou avec la ou les parois latérales formant le trou.

Par exemple est intercalé entre l'élément verrier et l'élément métallique un élément fonctionnel à couche ou et/ou à fil(s), notamment une ou des électrodes, un organe d'alimentation électrique, un miroir, un décor notamment à base d'émail non conducteur blanc ou coloré.

Cet élément fonctionnel est suffisamment mince et/ou de nature adéquate pour laisser la chaleur s'évacuer par l'élément verrier.

Cet élément fonctionnel, de préférence plan, est par exemple situé sur l'une ou les faces principales.

La structure peut ainsi intégrer toutes fonctionnalisations connues dans le domaine du vitrage. Parmi les fonctionnalisations on peut citer : couche hydrophobe/oléophobe, hydrophile/oléophile, photocatalytique antisalissure, empilement réfléchissant le rayonnement thermique (contrôle solaire) ou infra rouge (bas-émissif), antireflet.

Dans la présente invention, le terme couche peut signifier soit une seule couche soit une multicouche.

Et, pour optimiser le couplage, l'élément métallique peut présenter de préférence une surface de contact la plus large possible, par exemple une surface arrondie.

La surface de contact peut être de préférence supérieure à 5 mm², en particulier lorsque les diodes sont de haute puissance c'est-à-dire supérieure à 0,2 W et par exemple jusqu'à 5 W ou de haute luminosité c'est-à-dire supérieure à 5 lumens et par exemple jusqu'à 500 lumens.

Pour davantage de compacité, l'élément métallique peut être intégré dans le trou ou affleurer du trou.

Pour davantage de compacité et/ou une conception simplifiée et/ou un meilleure couplage thermique, l'élément métallique peut présenter en outre l'une ou les caractéristiques suivantes:
- être une pièce en une seule partie, monobloc par exemple,
- être une pièce discontinuité, en plusieurs parties, notamment deux parties, avec de préférence pour chaque partie une extrémité plane et en contact (direct ou indirect) avec une face principale ou avec la tranche avec le trou, cette extrémité (pattes etc) étant de préférence en contact avec une électrode ou un organe d'alimentation électrique,
- être allongé, être un profilé,
- avoir une section en L, en T ou en E, ou deux sections en L, notamment pour faire office d'élément de maintien ou d'alignement optique de la ou des diodes, être souple, ou plié notamment pour faire office d'élément de maintien,
- être mince, notamment d'épaisseur inférieure ou égale à 0,2 mm,
- être opaque, être en cuivre ou en inox,
- être réfléchissant, par exemple en aluminium, ou avoir une surface réfléchissante, par exemple une couche aluminium ou d'argent, pour rediriger le rayonnement,
- être associé à plusieurs diodes, notamment comme élément de maintien commun ou comme élément électrique commun à connecter à une seule électrode,
- ouvrir la ou les diodes pour les protéger et/ou les masquer, en étant éventuellement percé pour remplir le trou par de la résine d'indice ou de scellement (silicone etc),
- s'étendre tout le long d'un trou formant une rainure.

En particulier, l'élément métallique qui est un élément de connexion électrique peut être relié par une colle conductrice -notamment à l'argent, par un point de soudure - directement à la face arrière de la puce semi-conductrice - ou la face latérale si la puce est à émission latérale. Cette liaison peut s'étendre sur toute ou une partie de la face de la puce (au bord, au centre..). Cette liaison directe est solide, permet de limiter le nombre de liaisons électriques, et la longueur du circuit de connexion (notamment de supprimer des fils), et d'éviter toute dissipation ou court-circuit, tout risque de rupture de contact au voisinage de la diode.

En particulier, l'élément métallique qui est un élément de maintien, peut :
- être assemblé avec une embase conductrice, plane et mince, supportant la ou des diodes,
- être autobloquant dans le trou choisi à profil de rétention, par exemple avoir une partie ayant une forme sensiblement complémentaire à celle de la paroi latérale formant le trou, être monté en force, être encliqueté, être déformé, par exemple avec des pattes coplanaires se repliant lors de l'engagement dans le trou,
- comprendre, pour l'alignement et la fixation de la diode, un ressort en contact avec la diode, sensiblement perpendiculaire à la face ou à la tranche avec le trou et de préférence maintenu dans son axe par des moyens de guidage.

Le trou peut être disposé sur la tranche ou sur l'une des faces principales

Lorsque le trou est dans la tranche, l'élément de maintien de la source peut comprendre trois tronçons sensiblement plans:
- deux tronçons principaux en contact avec les faces principales,
- et un tronçon latéral en contact avec le bord de couplage de la tranche,
ledit élément de maintien étant apte à pincer la tranche ou les deux tronçons principaux étant munis de pattes s'engageant dans des encoches pratiquées sur les faces principales.

Pour une meilleure gestion des dissipations thermiques, l'élément métallique, (en particulier pour un trou en face principale), peut être couvert par:
- un élément isolant électrique et conducteur thermique, éventuellement adhésif, notamment un film, une feuille à base de silicone incluant (en quantité suffisante) des charges minérales (aluminium etc) ou un tissu, par exemple en fibres de verre, imprégné de silicone incluant des charges minérales,
- et une feuille (ou film) métallique, en cuivre, en graphite, en aluminium ou en argent.

Comme film isolant électrique et bon conducteur thermique, on peut citer les produits de la série TC3000™ de la gamme ThermaCool™ de Saint Gobain Norton, conformables et de dureté variable.

Comme adhésif, on peut utiliser de la résine acrylique.

Le trou peut être une rainure latérale, le long de la tranche, éventuellement débouchante sur au moins un côté pour faciliter le montage et/ou isoler des zones conductrices.

Par ailleurs, le trou peut présenter un profil de rétention (autrement dit une section de rétention) pour faciliter la fixation de la source. Le profil de rétention est par exemple tronconique, ou courbe, concave tourné vers l'intérieur notamment en coupelle, en forme de T, de trou de serrure. Le fond du trou est éventuellement facetté (en V).

La forme en coupelle permet de mieux répartir les efforts en cas de fixations de la structure par des éléments de liaison.

Le profil de rétention peut être aussi sensiblement en forme de losange ou de carré ou schématiquement en forme «< >» c'est-à-dire avec deux V tourné à 90° d'une des faces principales ou de la tranche.

Par ailleurs, le trou peut présenter l'une ou les caractéristiques suivantes:
- être large, notamment de largeur supérieure ou égale 2 mm, notamment pour faciliter le dépôt ultérieur d'une couche électroconductrice ou l'agencement de fil(s) conducteur(s) dans le fond,
- être alésé pour recevoir et, de préférence loger, l'élément métallique, et de préférence une ou des électrodes et/ou un organe d'alimentation électrique,
- être de géométrie permettant un effet d'ombrage lors d'un dépôt ultérieur d'une couche, afin de créer une rupture entre un dépôt d'une couche électroconductrice (par « CVD », magnétron etc) en surface et un dépôt dans le fond, pour former notamment des électrodes pour des diodes à contacts électriques sur des faces opposées de la puce.

La structure peut comprendre une pluralité de diodes alimentées en tension ou, pour diminuer les dissipations, alimentées en courant, de préférence par une piste électroconductrice discontinue encore plus préférentiellement obtenue par dépôt jet d'encre d'une matière chargée de (nano) particules métalliques, notamment argent ou cuivre.

Si les diodes sont à contacts électriques sur une même face de la puce, la discontinuité est obtenue simplement grâce aux trous, la piste s'étendant de part et d'autre des trous. La piste peut être droite si les diodes sont alignées.

Si les diodes sont agencées dans une rainure et à contacts électriques sur des faces opposées de la puce, on peut utiliser une piste électroconductrice discontinue ou un fil électrique discontinu dans le fond de la rainure. Les éléments métalliques par exemple de section en L peuvent servir pour les connexions avec des pistes électroconductrice disposées sur un même côté de la rainure.

Dans un mode de réalisation, la structure lumineuse selon l'invention peut comprendre des première et deuxième électrodes, éventuellement en contact avec l'élément métallique, respectivement disposées sur une même face principale, ou sur les deux faces principales, et/ou respectivement dans le fond du trou et en dehors du trou.

Au moins l'une des première et deuxième électrodes peut aussi avoir l'une ou les fonctions additionnelles suivantes :
- réfléchir le visible ou les UV,
- réfléchir le rayonnement thermique pour fournir un contrôle solaire, ou réfléchir les infrarouges pour une fonction de basse émissivité,
- ou encore former une électrode d'un élément optoélectronique associé à la structure lumineuse (électrochrome, miroir commutable, notamment en systèmes multicouches) par exemple pour faire varier la couleur, la transparence, les propriétés de transmission ou de réflexion de la lumière.

Par ailleurs, au moins l'une des première et deuxième électrodes peut couvrir sensiblement la face principale associée notamment pour faciliter et simplifier les connexions avec les organes d'alimentation électrique, par exemple situés en périphérie.

Au moins l'une des première et deuxième électrodes peut en outre être choisie transparente ou translucide en particulier pour les applications dans le domaine de l'éclairage.

Au moins l'une des première et deuxième électrodes peut comprendre une couche (électro)conductrice. Cette couche conductrice peut être opaque, réfléchissante, semi transparente par exemple métallique, à base d'argent, ou transparente, à partir d'un oxyde métallique conducteur ou présentant des lacunes électroniques notamment en oxyde d'étain dopé fluor (SnO₂:F), en oxyde mixte d'indium et d'étain (ITO), de l'oxyde de zinc dopé à l'indium ou à l'aluminium. Cette couche conductrice peut aussi être en polymère conducteur.

Cette couche conductrice peut être déposée par tous moyens connus de l'homme du métier tels que des dépôts par voie liquide, dépôts sous vide (pulvérisation magnétron, évaporation), par pyrolyse (voie poudre ou gazeuse), par sérigraphie.

Dans un mode de réalisation avantageux, la structure lumineuse comprend une couche mince conductrice, notamment métallique, basse émissive et/ou de contrôle solaire, recouverte d'une ou de couches minces diélectriques, et éventuellement intercalée entre des couches minces diélectriques, ladite couche mince conductrice formant au moins en partie l'une des première et deuxième électrodes.

Ainsi cette couche mince conductrice par exemple épaisse de quelques nanomètres ou d'une dizaine de nanomètres, peut être une (seule) couche à base d'or, de palladium ou de préférence d'argent, éventuellement incorporant d'autres métaux minoritaires.

L'empilement peut comprendre une pluralité de couches minces conductrices éventuellement avec des fonctionnalités distinctes (contrôle solaire pour une couche et une autre couche basse émissive située plus à l'intérieur).

La ou les couches minces diélectriques au-dessus de la (dernière) couche conductrice, par exemple épaisse(s) de quelques nanomètres ou d'une dizaine de nanomètres, sont par exemple à base des matériaux suivants :
- en nitrure, carbonitrure, oxynitrure ou oxycarbonitrure de silicium,
- en oxydes métalliques (par exemple oxyde de zinc, oxyde d'étain) éventuellement dopés.

Cette ou ces couches diélectriques sont aptes à maintenir la conduction électrique entre la couche mince conductrice et l'élément métallique de la puce par exemple parce qu'elles sont suffisamment minces et/ou sont suffisamment fuiteuses (leaky en anglais).

L'empilement est de préférence transparent, n'est pas nécessairement symétrique et de préférence ne comprend pas de couche de protection mécanique pour favoriser la conduction électrique.

Comme exemples d'empilements avec une couche mince fonctionnelle on peut citer les empilements décrits dans les documents EP718250, EP877006 incorporés ici par référence.

Comme exemples d'empilements avec plusieurs couches minces fonctionnelles on peut citer les empilements décrits dans les documents EP847965, WO03/010105, EP1060876, WO01/20375 incorporés ici par référence.

Au moins l'une des première et deuxième électrodes peut comprendre un fil ou même un réseau conducteur formé d'une pluralité de fils (ou de lignes) suivant une même orientation ou des orientations distinctes ou encore deux réseaux croisés de fils parallèles formant une grille (ou mesh en anglais).

Si nécessaire, on limite la largeur des fils (ou des lignes) :
- pour rendre les fils le plus discret possible à l'oeil nu si le matériau d'électrode est relativement opaque au rayonnement,
- et/ou pour éviter de nuire à l'émission du rayonnement.

Par exemple; on choisit une largeur I1 du fil (ou ligne) inférieure ou égale à 500 µm, de préférence 200 µm voire 50 µm ou même 10 µm. Cela dépend de la distance minimale de l'observateur (par exemple toujours à plus de 2 mètres ou plus rapproché).

Plus largement, ce réseau peut être défini par une largeur I1 de motifs (largeur maximale en cas de pluralité de largeurs) et un pas donné p1 entre motifs (pas minimal en cas de pluralité de pas).

On peut ainsi obtenir une transparence globale (UV ou visible) en utilisant un réseau de motifs conducteurs et en adaptant, en fonction de la transparence souhaitée, la largeur I1 et/ou le pas p1.

Aussi, le rapport largeur I1 sur pas p1 peut être inférieur ou égal à 50% de préférence inférieur ou égal à 10%, encore plus préférentiellement inférieur ou égal à 1%.

Par exemple, le pas p1 peut être compris entre 5 µm et 2 cm de préférence entre 50 µm et 1,5 cm encore plus préférentiellement 100µm et 1 cm, et la largeur I1 peut être entre 1 µm et 1 mm de préférence entre 10 et 200 µm voire 10 et 50 µm.

A titre d'exemple, on peut utiliser un réseau de lignes conductrices, par exemple en cuivre, avec un pas p1 de 100 µm et une largeur I1 de 10 µm, réseau sur une feuille de verre. Le réseau peut aussi être sérigraphié.

On peut aussi utiliser un réseau de fils conducteurs sur une feuille de verre, en choisissant un pas p1 entre 1 et 10 mm, notamment 3 mm, et une largeur I1 entre 10 et 200 µm, notamment entre 10 et 50 µm voire entre 20 et 30 µm.

Pour l'alimentation électrique, la structure selon l'invention peut comprendre des organes d'alimentation électrique couplés aux première et deuxième électrodes et notamment sous forme de bandes conductrices sérigraphiées en émail à l'argent (souvent appelé 'bus bar') de préférence disposées en bordure de l'élément diélectrique et, notamment en bordure d'une face principale.

On peut aussi utiliser des fils (en cuivre etc), des fiches, des clinquants, des câbles...

Dans un mode de réalisation avantageux, au moins une électrode et/ou un organe d'alimentation électrique (notamment pour une alimentation en courant) est une piste obtenue par dépôt jet d'encre d'une matière chargée de (nano)particules métalliques, notamment argent ou cuivre, ou est sérigraphiée.

Ces techniques présentent l'avantage de former une sorte de colle conductrice. Cela peut favoriser :
- le contact thermique entre l'élément métallique choisi élément de connexion électrique et l'élément diélectrique
- et/ou le maintien de la diode dans le trou pour un élément métallique choisi élément de maintien.

La ou des diodes peuvent être encapsulées c'est-à-dire comprenant une puce semi-conductrice et une enveloppe, par exemple en résine type époxy ou en PMMA, encapsulant la puce et dont les fonctions sont multiples :protection de l'oxydation et de l'humidité, élément diffusant ou de focalisation, conversion de longueur d'onde, ....

Les diodes peuvent être aussi de simples puces semi-conductrices par exemple de taille de l'ordre de la centaine de µm ou du mm, ce qui rend possible une liaison directe avec l'élément métallique, simplifie le montage et réduit le coût de la structure.

La diode peut toutefois comprendre une enveloppe protectrice partielle, laissant les premier et deuxième contacts libres, par exemple pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode avec des contacts électriques sur les faces opposées de la puce ou sur une même face de la puce
- une diode à émission latérale, c'est-à-dire parallèlement aux (faces de) contacts électriques,
- une diode dont la direction principale d'émission est perpendiculaire ou oblique par rapport la face émettrice de la puce,
- une diode présentant deux directions principales d'émission obliques par rapport la face émettrice de la puce donnant une forme d'aile de chauve souris (« batwing » en anglais), les deux directions étant par exemple centrées sur des angles entre 20° et 40° et entre -20° et -40° avec des demi angles au sommet de l'ordre de 10° à 20°,
- une diode présentant (uniquement) deux directions principales d'émission obliques par rapport la surface émettrice de la diode, centrées par exemple sur des angles entre 60° et 85° et entre - 60° et -85° avec des demi angles au sommet de l'ordre de 10° à 30°,
- une diode disposée pour un guidage dans la tranche ou pour émettre directement par l'une ou les faces, ou par le trou (diode alors dite inversée).

Le diagramme d'émission d'une source peut être lambertien.

Typiquement, une diode collimatée présente un demi angle au sommet pouvant descendre jusqu'à 2 ou 3°.

La diode peut être collée dans le trou, avec une colle diélectrique dans le fond du trou. En particulier, pour une diode à émission latérale, dont les contacts électriques de la puce sont alors en regard de la ou des parois latérales formant le trou, on peut choisir d'utiliser une colle conductrice notamment à l'argent pour former des liaisons électriques avec des électrodes de part et d'autre du trou et les contacts de la puce.

Pour éviter l'éblouissement, un élément têt qu'un diffuseur, peut être ajouté dans la structure, notamment sous forme d'une couche diffusante additionnelle, notamment sur la face principale opposée à celle du trou. La surface de l'élément diélectrique peut aussi remplir cette fonction diffusante.

La structure peut comprendre avantageusement une couche diffusante minérale associée à l'une des faces principales qui est une face lumineuse (éclairage direct ou par extraction du rayonnement).

La couche diffusante peu être composée d'éléments contenant des particules et un liant, le liant permettant d'agglomérer entre elles les particules.

Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

La structure peut comprendre une diode réceptrice de signaux de commande, notamment dans l'infrarouge, pour télécommander cette diode.

Comme déjà indiqué plus haut, des diodes peuvent être (pré)assemblées sur un ou des supports conducteurs coplanaires de préférence minces notamment d'épaisseur inférieure ou égale à 1 mm, voire 0,1 mm, lesquels sont associés aux éléments métalliques.

L'élément diélectrique minéral peut être de préférence verrier.

De préférence, le facteur de transmission autour du pic du rayonnement dans le visible ou l'UV (perpendiculairement aux faces principales) est supérieur ou égal à 50%, encore plus préférentiellement supérieur ou égal à 70%, et même supérieur ou égal à 80%.

L'élément diélectrique minéral peut être opaque si la diode est inversée.

De préférence, lorsque le guide est transparent au rayonnement, au moins un bord de la tranche qui n'est pas un bord de couplage du rayonnement à l'intérieur du guide est réflecteur, de préférence métallisé.

Si les électrodes sont sur une face principale sous forme de couches électroconductrices, on peut prévoir une marge isolante en périphérie de cette face.

La structure peut être un vitrage multiple, notamment un vitrage sous vide ou avec lame d'air ou autre gaz ou un vitrage feuilleté. Comme intercalaire de feuilletage usuel, on peut citer le polyuréthane (PU) utilisé souple, un thermoplastique sans plastifiant tel que le copolymère éthylène/acétate de vinyle (EVA), le polyvinyl butyral (PVB). Ces plastiques ont par exemple avec une épaisseur entre 0,2 mm et 1,1 mm, notamment 0,38 et 0,76 mm.

La structure peut comprendre un vitrage feuilleté formé dudit guide minéral choisi feuille de verre, d'un intercalaire de feuilletage choisi diffusant, par exemple un PVB translucide pour répartir la lumière, et d'un contre verre éventuellement avec une face externe principale diffusante (par texturation ou par couche additionnelle).

Toutefois, de préférence, le guide peut être monolithique pour former une structure monolithique de préférence un vitrage simple pour gagner encore en compacité et/ou en légèreté.

L'élément diélectrique peut être très mince ou relativement épais, par exemple de 0,5 à à 20 mm pour du verre.

L'élément diélectrique peut être de toute forme (rectangulaire, carré, rond, ovale,...), et être plan ou légèrement bombé.

L'élément verrier peut être préférentiellement en verre sodocalcique clair ou extraclair. L'élément diélectrique peut ainsi présenter une transmission lumineuse T_{L} supérieure ou égale à 90 % et préférentiellement supérieure ou égale à 91,5% (verre appelé extraclair).

On peut se référer à la demande WO04/025334 pour la composition d'un verre extraclair. On peut choisir un verre silicosodocalcique avec moins de 0,05% de Fe III ou de Fe₂O₃.

On choisit de préférence le verre Diamant de Saint-Gobain, le verre Albarino de Saint-Gobain (texturé ou lisse), le verre Optiwhite de Pilkington, le verre B270 de Schott.

Le verre peut être coloré. Le verre peut avoir éventuellement préalablement subi un traitement thermique du type durcissement, recuit, trempe, bombage. Ce verre peut aussi être maté, sablé, sérigraphié etc.

La diode peut émettre un rayonnement UV, excitateur de luminophore(s), par exemple un rayonnement UVC (entre 200 et 280 nm).

L'élément diélectrique peut alors être en un matériau transmettant le rayonnement UV choisi notamment parmi le quartz, la silice, le fluorure de magnésium (MgF₂) ou de calcium (CaF₂), un verre borosilicate, un verre avec moins de 0,05% de Fe₂O₃.

A titre d'exemples, pour des épaisseurs de 3 mm:
- les fluorures de magnésium ou de calcium transmettent à plus de 80% voire 90% sur toute la gamme des UV (UVA, UVB et UVC, VUV),
- le quartz et certaines silices haute pureté transmettent à plus de 80% voire 90% sur toute la gamme des UV.

La source peut émettre en particulier un rayonnement UV ou proche UV c'est-à-dire entre 360 et 400 nm.

Les verres borosilicates, comme le borofloat de Schott, transmettent à plus de 70% sur toute la gamme des UVA (pour 3 mm d'épaisseur). Les verres silicosodocalciques avec moins de 0,05% de Fe III ou de Fe₂O₃, notamment le verre Diamant de Saint-Gobain, le verre Optiwhite de Pilkington, le verre B270 de Schott, transmettent à plus de 70% voire 80% sur toute la gamme des UVA (pour 3 mm d'épaisseur).

En outre, un verre silicosodocalcique, tel que le verre Planilux vendu par la société Saint-Gobain, présente une transmission supérieure à 80% au delà de 360 nm ce qui peut suffire pour certaines réalisations et certaines applications.

La structure peut comprendre au moins un revêtement luminophore sur l'une ou les faces principales, le rayonnement UV étant excitateur du luminophore.

Le matériau luminophore peut avantageusement être sélectionné ou adapté pour déterminer la couleur de l'éclairage dans une large palette de couleurs. Le luminophore ou un mélange de luminophores peut permettre d'obtenir une lumière blanche notamment à partir de diodes monochromatiques dans le visible ou le proche UV.

Tout ou une partie des faces de l'élément diélectrique peut être revêtue du matériau luminophore émettant dans le visible afin de constituer des zones éclairantes et des zones « sombres » juxtaposées. Et le luminophore peut être lui-même transparent.

Au moins l'une des première et deuxième électrodes peut être à base d'un matériau transmettant ledit rayonnement UV ou être arrangée pour permettre une transmission globale audit rayonnement UV si le matériau est absorbant ou réfléchissant aux UV.

Le matériau d'électrode transmettant ledit rayonnement UV peut être une couche très mince d'or, par exemple de l'ordre de 10 nm, ou de métaux alcalins tels que potassium, rubidium, césium, lithium ou potassium par exemple de 0,1 à 1 µm, ou encore en un alliage par exemple 25% sodium, et 75% de potassium.

Une couche d'oxyde d'étain dopé fluor peut aussi convenir.

La structure peut être essentiellement minérale notamment pour une grande tenue au flux, par exemple si la diode est une diode de puissance.

La structure selon l'invention peut être utilisée pour un éclairage décoratif, architectural, domestique ou industriel, notamment former un luminaire plan tel qu'une paroi éclairante, notamment suspendue, ou une dalle éclairante ou une lampe, notamment de très faible épaisseur. Elle peut aussi avoir une fonction d'éclairage de nuit ou d'affichage d'informations de toutes natures de type dessin, logo, signalisation alphanumérique ou autres signalétiques, par exemple former un panneau de type enseigne ....

La structure peut en outre avoir deux faces (partiellement) lumineuses, notamment avec un guidage par la tranche, ou une seule face (partiellement) lumineuse, l'autre côté étant absorbant ou de préférence réfléchissant.

Des diodes peuvent être arrangées en bordure ou être réparties, régulièrement ou non, sur toute la surface de la structure selon l'invention, et éventuellement constituer des motifs décoratifs ou constituer un affichage tel qu'un logo ou une marque.

La structure lumineuse, notamment un vitrage, peut être:
- destinée au bâtiment,
- destinée au mobilier urbain tel qu'abribus, panneau de signalisation ou publicitaire, une balustrade,
- destinée à l'éclairage routier, urbain, par exemple pour un pont piétonnier,
- à un aquarium, un présentoir, une vitrine, un élément d'étagère, une serre,
- destinée à l'ameublement intérieur, en particulier plan de travail de cuisine ou paroi de salle de bains, à un miroir,
- utilisée pour la photothérapie (traitement de la jaunisse, de la dépression...),
- destinée un écran de système d'affichage du type ordinateur, télévision, téléphone,
- ou encore être électrocommandable, et notamment être un dispositif de rétroéclairage d'un écran à cristaux liquides.

La structure selon l'invention peut être intégrée par exemple dans un équipement électroménager par exemple être une tablette de réfrigérateur, une tablette de cuisine.

La structure peut servir aussi comme porte, comme cloison de bureaux ou magasin, balustrade, façade de bâtiments (châssis) ou en vitrage structurel fixé par point (de type produit Spider vendu par la société Saint-Gobain ...), ou encore comme vitre de meubles, vitre d'étalages de bijouterie, vitre de musée.

La structure peut être en verre pour former une porte verrière. Elle peut être en particulier une porte verrière sécurisée par les diodes pour éviter les accidents de personnes ou l'endommagement d'objets. La porte peut être coulissante, à charnière, en deux parties latérales pour une ouverture/fermeture centrale pour l'accès aux bâtiments, de réseaux urbains de transport etc.

Dans un premier mode de réalisation de cette porte, la structure comprend une pluralité de diodes alignées dans le trou formant une rainure et formé dans la face principale dotée de première et deuxième électrodes, et des moyens de pilotage des diodes pour émettre le rayonnement par intermittence en fonction de la position de la porte, par rupture (interruption) d'alimentation électrique.

Par exemple l'une des électrodes et un bus bar associé sont discontinus sur le trajet d'un contacteur mécanique mobile (roulette..) relié à des moyens de détection (caméra..) de personne ou d'objet en mouvement devant la porte et/ou à des moyens d'identification de personne (badge etc). La rupture d'alimentation peut aussi intervenir en utilisant un signal pulsé commandé par les moyens de détection.

Dans un deuxième mode de réalisation de cette porte, les moyens de pilotage des diodes servent pour émettre des rayonnements de différentes couleurs en fonction de la position de la porte (par exemple du rouge ou vert), par rupture d'alimentation électrique.

La structure peut par ailleurs être une lampe avec des diodes rouges, vertes et bleues en commande statique Dans un mode de réalisation de cette lampe, la structure comprend :
- une pluralité de première pistes conductrices, de préférence sensiblement parallèles, reliées (par une extrémité etc) à un organe d'alimentation électrique commun, de préférence un 'bus bar',
- et une pluralité de deuxième pistes conductrices, de préférence sensiblement parallèles, pistes en alternance, avec les première pistes conductrices, et alimentées par un autre organe d'alimentation électrique commun (par une extrémité etc), de préférence un 'bus bar',
- une pluralité de trous, de préférence formant rainures, chacun intercalé entre des première et deuxième pistes adjacentes formant des première et deuxième électrodes, les trous logeant des diodes et des éléments métalliques servant d'éléments de connexion électrique et de préférence de maintien.

Chaque rangée de diodes est par exemple d'une couleur distincte, par exemple rouge puis verte et/ou bleue.

La structure peut de préférence être transparente, au moins en dehors de(s) zone(s) à diode, par exemple former une fenêtre éclairante.

En outre, la ou les diodes peuvent être quasiment invisibles à l'oeil nu, à l'état 'off'.

La structure lumineuse peut former un vitrage éclairant pour un véhicule de transport, par exemple pare-brise, lunette arrière, vitre latérale le toit ouvrant ou non ouvrant, rétroviseur, ou verre de protection, ou pour tout autre véhicule terrestre, aquatique ou aérien.

L'insertion de diodes dans ces vitrages permet, notamment, les fonctionnalités de signalisation suivantes:
- affichage de témoins lumineux de signalisation destinés au chauffeur du véhicule ou aux passagers (exemple : témoin d'alarme de température du moteur dans le pare-brise, témoin de mise en fonctionnement du système de dégivrage électrique, des vitres);
- affichage de témoins lumineux de signalisation destinés aux personnes à l'extérieur du véhicule (exemple : témoin de mise en fonctionnement de l'alarme du véhicule dans les vitres latérales);
- affichage lumineux sur les vitrages des véhicules (par exemple affichage lumineux clignotant sur les véhicules de secours, affichage de sécurité avec faible consommation électrique signalant la présence d'un véhicule en danger).

L'insertion de diode(s) dans les vitrages automobiles permet, notamment, les fonctionnalités d'éclairage suivantes :
- éclairage d'ambiance de l'intérieur du véhicule de façon particulièrement esthétique (par exemple intégration de l'éclairage d'ambiance dans le toit en verre d'un véhicule) ;
- feux lumineux et phare dans le surface du vitrage (par exemple intégration dans la lunette arrière du véhicule du troisième feu « stop »).

L'invention vise enfin un procédé de fabrication de la structure lumineuse telle que définie précédemment comprenant les étapes suivantes:
- façonnage du trou,
- dépôt d'une couche conductrice formant deux électrodes sur l'une des faces principales,
- et de préférence trempe de l'élément verrier.

Pour l'effet d'ombrage, le dépôt est choisi de préférence par pulvérisation 'PVD' (cathodique magnétron etc..) et/ou le façonnage confère au trou un profil de rétention, le dépôt pouvant alors s'effectuer aussi par CVD.

Le façonnage du trou comprend préférentiellement un alésage pour recevoir ledit élément métallique.

On peut aussi prévoir une étape de dépôt jet d'encre, si le trou est suffisamment large, pour placer le bus bar, sur l'électrode dans le fond.

En variante, on forme une électrode en plaçant un ou des fils minces dans le fond du trou.

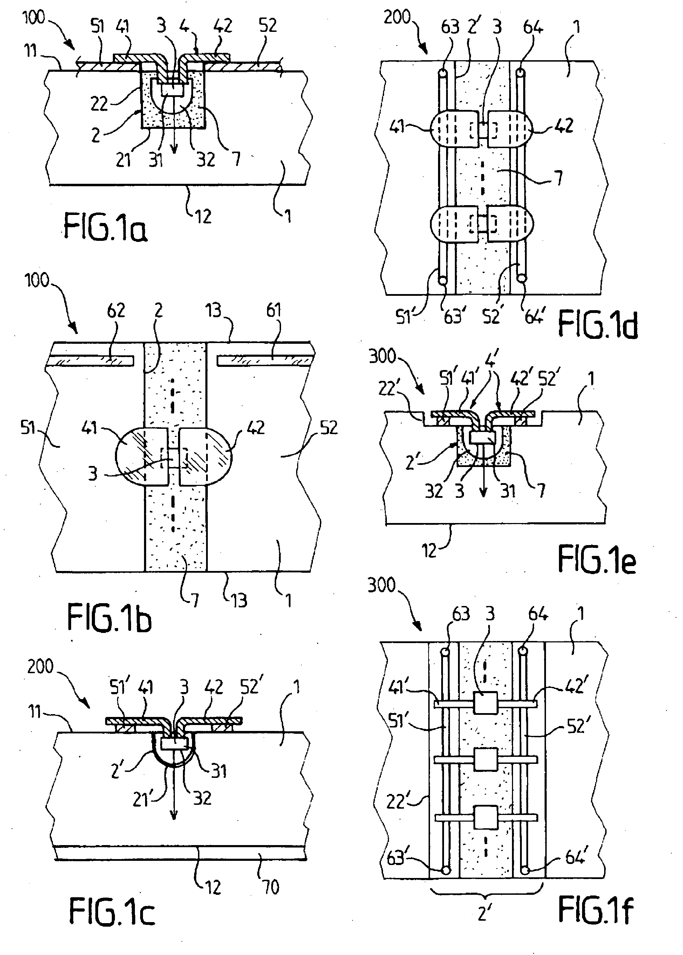

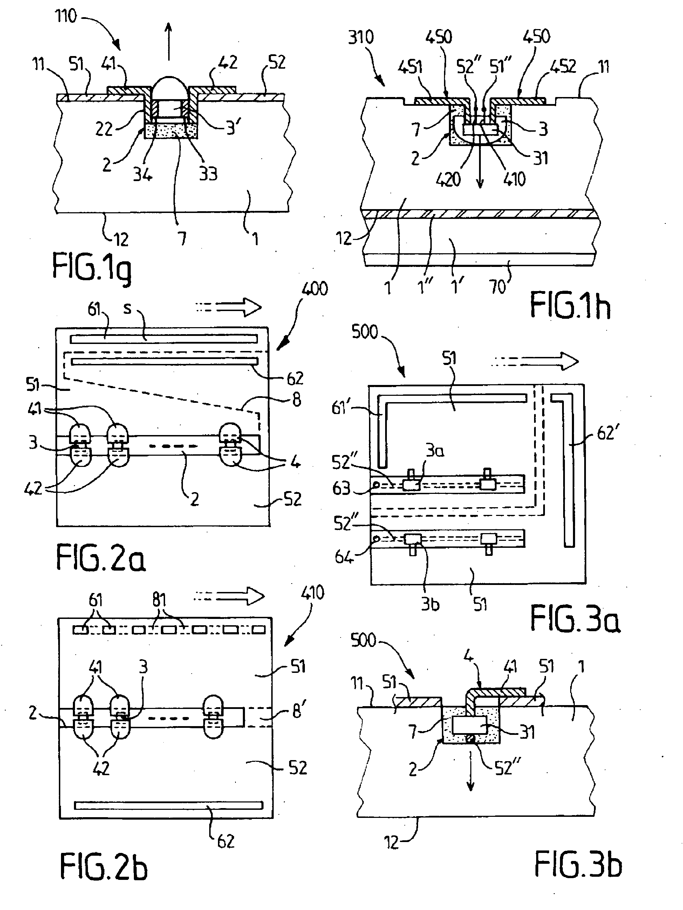

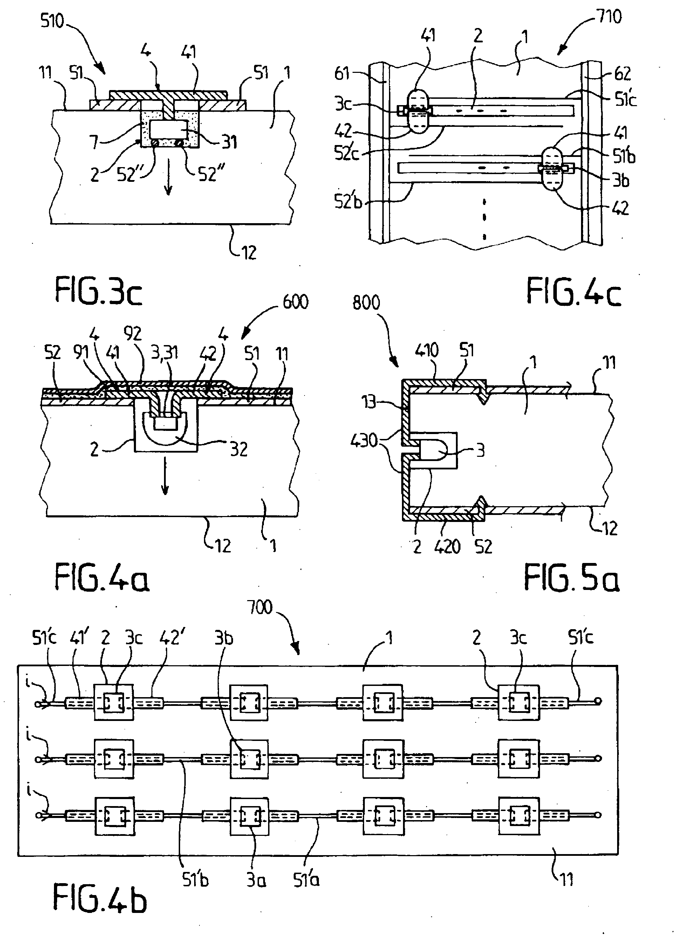

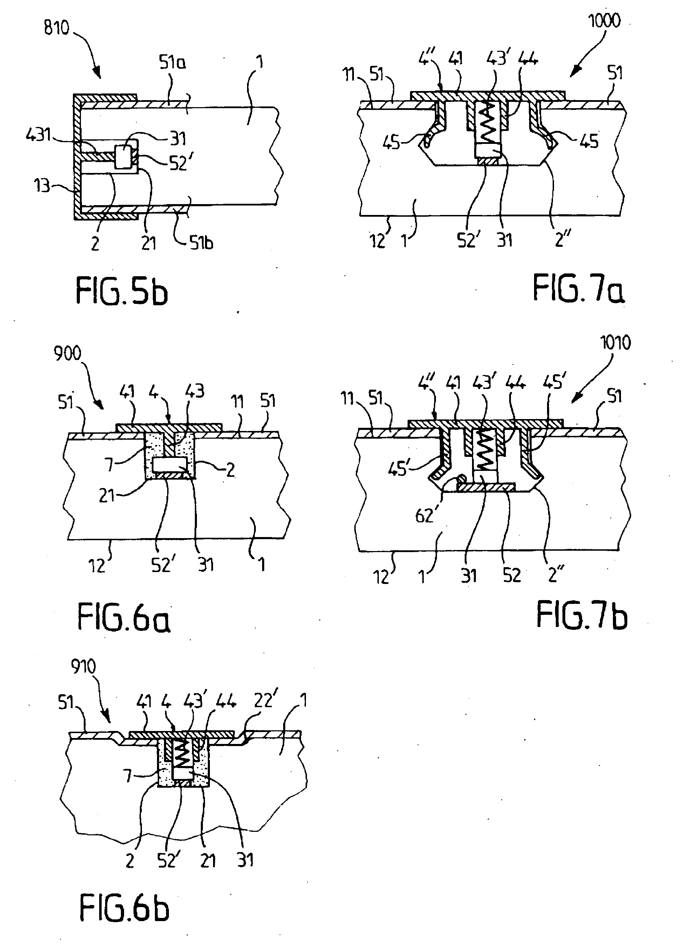

D'autres détails et caractéristiques avantageuses de l'invention apparaissent à la lecture des exemples de structures lumineuses selon l'invention illustrées par les figures suivantes:
■ Les figures 1a et 1b représentent respectivement une vue schématique, partielle de coupe et une vue schématique, partielle et de dessus d'une structure lumineuse à diode 100 dans un premier mode de réalisation de l'invention,
■ Les figures 1c et 1d représentent respectivement une vue schématique, partielle de coupe et une vue schématique, partielle et de dessus d'une structure lumineuse à diode 200 dans un deuxième mode de réalisation de l'invention,
■ Les figures 1e et 1f représentent respectivement une vue schématique, partielle de coupe et une vue schématique, partielle et de dessus d'une structure lumineuse à diode 300 dans un troisième mode de réalisation de l'invention,
■ Les figures 1g et 1h représentent des vues schématiques, partielles de coupe des structures lumineuse à diodes 110, 310 respectivement dans des variantes du premier et troisième mode de réalisation de l'invention,
■ Les figures 2a et 2b représentent schématiquement des vues de face de structures lumineuses à diode 400, 410 dans un quatrième mode de réalisation de l'invention et dans une variante,
■ Les figures 3a et 3b représentent respectivement une vue schématique, partielle de face et une vue schématique, partielle et de coupe d'une structure lumineuse à diode 500 dans un cinquième mode de réalisation de l'invention,
■ La figure 3c représente une vue schématique, partielle et de coupe d'une structure lumineuse à diode 510 dans une variante du cinquième mode de réalisation de l'invention,
■ La figure 4a représente une vue schématique, partielle et de coupe d'une structure lumineuse à diode 600 dans un sixième mode de réalisation de l'invention,
■ La figure 4b représente une vue schématique, partielle de face d'une structure lumineuse à diodes dans un septième mode de réalisation de l'invention,
■ La figure 4c représente une vue schématique, partielle de face d'une structure lumineuse à diodes dans un autre mode de réalisation de l'invention,
■ Les figures 5a et 5b représentent des vues schématiques, partielles et de coupe de structures lumineuses à diodes 800, 810 dans un huitième mode de réalisation de l'invention et dans une variante,
■ Les figures 6a et 6b représentent des vues schématiques, partielles et de coupe de structures lumineuses à diodes 900, 910 dans un neuvième mode de réalisation de l'invention et dans une variante,
■ Les figures 7a et 7b représentent des vues schématiques, partielles et de coupe de structures lumineuses à diodes 1000, 1010 dans un dixième mode de réalisation de l'invention et dans une variante.

On précise que par un souci de clarté les différents éléments des objets représentés ne sont pas nécessairement reproduits à l'échelle.

Les figures 1a et 1b représentent respectivement une vue schématique, partielle de coupe et une vue schématique, partielle et de dessus d'une structure lumineuse à diode 100 dans un premier mode de réalisation de l'invention.

Cette structure lumineuse 100 comprend un élément diélectrique minéral plan, par exemple parallélépipédique, de préférence une feuille 1 en verre d'absorption très faible pour un rayonnement monochromatique dans le visible ou même de plusieurs rayonnements dans le visible. On préfère ainsi un verre avec un coefficient d'absorption linéique inférieur ou égal à 1,8 10⁻³ mm⁻¹ dans le visible. On peut ainsi choisir un verre sodocalcique extraclair, par exemple un verre albarino de saint gobain, épais de 4 ou 6 mm.

La feuille 1 est dotée de première et deuxième faces principales parallèles 11, 12 et d'une tranche (non visible).

Cette structure 100 émet de préférence en éclairage direct via la deuxième face 12 à l'aide de diodes 3 dont la direction principale d'émission (symbolisée par la flèche) est perpendiculaire à la face de la puce semi-conductrice 31, par exemple avec une couche active à multi puits quantique, de technologie AlInGaP ou autres semi-conducteurs. Chaque puce comporte des première et deuxième couches de contacts sur la face arrière.

Chaque diode 3 est encapsulée et est pourvue d'une lentille de focalisation 32. Toutes les teintes sont envisageables. On peut aussi régler la puissance via l'alimentation et/ou utiliser plusieurs couleurs.

Ces diodes (dont une seule est montrée en figure 1b pour plus de clarté) sont logées dans une rainure 3, de profil ou section par exemple rectangulaire, pratiquée sur la première face 11. La section peut aussi être de rétention. Les parois et/ou le fond peuvent être courbes, facettés.

Une matière de remplissage 7 transparente (de type silicone par exemple) comble les espaces entre les diodes, entre les diodes et le fond 21, entre les diodes et les parois latérales 22.

La rainure (voir figure 1b) est rectiligne ou en variante de tout autre forme pour un agencement spécifique des diodes en fonction de l'effet lumineux recherché (élément signalétique..).

Le verre 1 peut comprendre en outre une multiplicité de rainures parallèles entre elles et logeant des diodes, par exemple pour former une dalle éclairante, une paroi lumineuse...

Des moyens de pilotage des diodes permettent d'émettre le rayonnement en permanence ou par intermittence, d'une couleur donnée, ou de différentes couleurs.

Les diodes peuvent former un dessin lumineux, par exemple un logo ou une marque.

En insérant un grand nombre de diodes, une intensité lumineuse équivalente à celle d'un éclairage incandescent peut être obtenue, tout en nécessitant une consommation plus faible.

Cette structure peut servir par exemple pour un éclairage décoratif ou de signalisation, par exemple comme panneau ou cloison lumineuse.

L'une des diodes peut être remplacée par une diode servant pour télécommander la structure, en recevant des signaux dans l'infrarouge.

Sur la première face 11, et de part et d'autre de la rainure 3, des électrodes 5 sont sous forme des deux couches conductrices transparentes 51, 52, de préférence à base d'oxyde d'étain dopé au fluor déposées, par exemple par CVD, avant façonnage du trou. La rainure est débouchante sur deux côtés opposés de la tranche 13, isolant ainsi les électrodes. En variante ou en complément, on peut graver la couche pour former une ou des zones isolantes et éventuellement adresser individuellement les diodes.

L'une ou les couches conductrices transparentes peuvent être dans un empilement. L'une des couches transparentes peut être remplacée par une couche semi transparente (notamment sérigraphiée), par une couche miroir, par exemple en argent, par un réseau de motifs conducteurs notamment fils ou lignes ou grille.

Des organes d'alimentation électrique 61, 62 sont couplés aux première et deuxième électrodes 51, 52 et sont sous forme de bandes conductrices sérigraphiées en émail à l'argent ('bus bar'), placées en périphérie (bord longitudinal ou bord latéral) dans une zone facilement masquée.

Chaque diode 3 est reliée à un élément métallique, en cuivre ou en inox par exemple, en deux parties identiques à profil ou section en L. Ainsi les bases des L sont reliées par leur extrémité à un contact électrique distinct sur la face arrière de la puce, et les autres extrémités des L reposent en grande partie sur les électrodes 51 , 52 et sont ainsi en contact indirect avec la première face principale 11.

La surface arrondie des parties métalliques est suffisamment large 41, 42 et l'épaisseur de l'électrode suffisamment fine pour que le verre contribue de manière significative à évacuer la chaleur produite par les diodes en fonctionnement.

Ainsi, de manière surprenante, le verre 1 est suffisamment bon conducteur thermique pour gérer les problèmes de dissipations thermiques.

L'élément métallique 4 est de conception simple et multi-fonctions. Cet élément métallique est propre à chaque diode ou en variante peut être commun à une série de diodes.

Chaque partie métallique 41, 42 fait office d'élément de connexion électrique entre la diode et l'électrode associée, sert comme de maintien de diode(s) dans la rainure, pour son alignement optique et masque la ou des diodes.

L'élément métallique est par exemple épais de 0,2 mm, la surface de contact est de l'ordre de 5 mm² pour des diodes « décoratives » et de 20 mm² pour des diodes de puissance. Ainsi, l'élément métallique affleure du trou.

La structure ainsi présentée est compacte et robuste.

L'élément métallique 41, 42 peut être collé aux électrodes 51, 52 par une colle conductrice type argent.

Chacune des diodes 4 pourrait être, en variante, dans un trou individuel. Les deux parties métalliques 41, 42 peuvent alors être par exemple à 90°.

La tranche du verre (non visible) peut être métallisée pour être réfléchissante.

Les électrodes, sont éventuellement dans un empilement de couches et/ou peuvent aussi avoir l'une ou les fonctions additionnelles suivantes : réfléchir le rayonnement thermique pour fournir un contrôle solaire, ou réfléchir les infrarouges pour une fonction de basse émissivité,

Les faces principales peuvent aussi intégrer une couche hydrophobe/oléophobe, hydrophile/oléophile, photocatalytique antisalissure etc.

Différents types de diodes ('bat wing', à émission latérale, diodes de plusieurs couleurs) et d'orientation des diodes dans le trou peuvent être prévus. Dans une configuration, au moins l'une des diodes peut émettre un rayonnement, par exemple un rayonnement UVA ou UVC, excitant un luminophore rajouté sur la faces principale 12 ou remplaçant la résine 7.

Les figures 1c et 1d représentent respectivement une vue schématique, partielle de coupe et une vue schématique, partielle et de dessus d'une structure lumineuse à diode 200 dans un deuxième mode de réalisation de l'invention.

Cette structure lumineuse 200 diffère de la structure 100 de la façon suivante :
- la rainure 2' présente un fond concave 21',
- les diodes sont collées dans la rainure avec une colle adéquate par exemple limitant les réflexions,
- les électrodes 51', 52', sont des pistes de jet d'encre avec des (nano)particules métalliques, par exemple argent ou cuivre, larges par exemple de 0,2 mm,
- les bus bars sont remplacés par ou des fils électriques en cuivre (non visibles) raccordés par des points de soudure 63 à 64' périphériques,
- la face 12 comprend une couche minérale diffusante 70.

En outre, les parties métalliques 41, 42 peuvent ainsi être aussi en contact direct (en étant coudées, plus longues, ou par un montage adapté) avec le verre 1.

Par ailleurs, ces pistes de jet d'encre sont suffisamment collantes pour fixer les parties métalliques 41, 42.

Les figures 1e et 1f représentent respectivement une vue schématique, partielle de coupe et une vue schématique, partielle et de dessus d'une structure lumineuse à diode 300 dans un troisième mode de réalisation de l'invention

Cette structure lumineuse 300 diffère de la structure 200 de la façon suivante:
- la rainure 2 comprend un alésage 22 recevant les parties métalliques 41', 42', ne dépassant alors pas de la rainure,
- les parties métalliques 41', 42' sont de surface de contact plus réduite, par exemple surface rectangulaire et non arrondie, qui convient pour une application décorative,
- les électrodes 51', 52' et les points de soudure 63 à 64' sont également dans l'alésage 22,
- la rainure 2' est en partie de section rectangulaire, avec un fond plat.

La figure 1g représente une vue schématique, partielle de coupe d'une structure lumineuse à diodes 110, dans une variante du premier mode de réalisation de l'invention.

Cette structure lumineuse 110 diffère de la structure 100 de la façon suivante: les diodes 3' sont à émission latérale et en position inversée pour émettre un rayonnement en direction de la face 11, leurs contacts 33, 34 étant alors collés (colle à l'argent ou autre) ou maintenus par pression sur les parties métalliques 41, 42 venant en appui sur les parois latérales 22 de la rainure 2.

En outre, l'espace entre la face opposée à l'émission et le fond est rempli par la résine 7 (remplissage par la tranche).

Les diodes peuvent aussi reposer sur le fond 21 ou être collées (par une colle diélectrique) sur le fond.

La tranche n'est pas nécessairement métallisée.

La figure 1h représente une vue schématique, partielle de coupe d'une structure lumineuse à diodes 310, dans une variante du troisième mode de réalisation de l'invention.

Cette structure lumineuse 310 diffère de la structure 300 de la façon suivante:
- les parties métalliques 451, 452, ne jouent pas un rôle d'éléments de connexion électrique, et sont alors reliés à des zones isolantes de la face arrière de la puce 31,
- des fils électriques minces 410, 420 par exemple en or, et de préférence logés dans la rainure 2 sont reliés à des électrodes à fils 51", 52",
- la structure 310 est feuilletée et comprend en plus un intercalaire de feuilletage 1" de préférence diffusant, par exemple un PVB translucide, et un contre verre 1' avec une couche diffusante minérale 70 pour un deuxième niveau de diffusion.

La figure 2a représente schématiquement une vue de face d'une structure lumineuse à diode 400 dans un quatrième mode de réalisation de l'invention.

Cette structure sert de porte coulissante 400 (mobile vers la droite comme montré par la flèche épaisse) sécurisée par les diodes 3.

Les diodes sont alignées dans une rainure formée dans une face principale du verre et débouchante sur un seul côté de la tranche. Cette face principale comprend deux électrodes sous forme de couches transparentes conductrices 51, 52 séparées, par exemple par gravure, par une zone isolante 8. Chacune des électrodes est alimentée par un 'bus bar' 61, 62 longeant par exemple un même bord du verre et séparés par la zone isolante 8.

Des moyens de pilotage (non visibles) des diodes permettent d'émettre le rayonnement par intermittence en fonction de la position de la porte, et en utilisant un signal pulsé *s* (en créneau etc...). Par exemple lorsque la porte est fermée ou quasi fermée, les diodes 3 sont allumées et lorsque la porte s'ouvre, par exemple après détection d'une personne, les diodes s'éteignent ou clignotent.

La figure 2b représente schématiquement une vue de face d'une structure lumineuse à diode 410 dans une variante du quatrième mode de réalisation de l'invention.

Cette structure sert de porte coulissante 410 (mobile vers la droite comme montré par la double flèche) et diffère de la structure 400 en ce que:
- une première zone isolante 8' est limitée à une zone entre la rainure et la tranche (voire supprimée si la rainure devient débouchante sur les deux côtés),
- les première et deuxième 'bus bars' 61, 62 sont respectivement situés en haut et en bas de la porte, le premier bus bar étant discontinu et ces discontinuités étant en coïncidence avec des zones isolantes 81 de la première électrode 51.

Les diodes émettent le rayonnement (rouge, vert...) par intermittence lorsqu'un contacteur mécanique (roulette ou autre) est sur l'une des zones du bus bar 61.

De préférence le verre 1 est épais et trempé.

En variante, on intègre ce système dans une porte à charnière en positionnant les connexions de manière adéquate sur un bord longitudinal.

Les figures 3a et 3b représentent respectivement une vue schématique, partielle de face et une vue schématique, partielle et de coupe d'une structure lumineuse à diode 500 dans un cinquième mode de réalisation de l'invention

Cette structure sert de porte coulissante 500 (mobile vers la droite comme montré par la double flèche) diffère que la structure 400 en ce que :
- la disposition des premier et deuxième bus bars 61', 62', sur des bords contigus.
- le nombre de rainures accueillant des diodes 3a, de couleur distincte, sur une rangée les diodes 3a étant rouges, sur l'autre les diodes 3b étant vertes.
- la disposition de la zone isolante 8, séparant une électrode 51 de en deux électrodes de même polarité chacune reliée à un bus bar 61', 62'.

En outre, les diodes 3 sont de simples puces semi-conductrices 31, et à contacts sur faces opposées. Leur agencement est présenté en figure 3b. La deuxième électrode 52" est un fil conducteur mince collé sur le fond de la rainure 2 et sur les faces avant (émettrices) de toutes les diodes (au centre ou sur les bord).

Lorsque la porte est fermée ou quasi fermée, les diodes rouges 3b sont allumées, et lorsque la porte s'ouvre, les diodes vertes sont allumées.

L'élément métallique 4 comprend une seule partie métallique 41 en forme de L.

La figure 3c représente une vue schématique, partielle et de coupe d'une structure lumineuse à diode 510 dans une variante du cinquième mode de réalisation de l'invention, se différenciant par la disposition périphérique deux fils minces 52" formant électrode, par la section en T de l'élément métallique 4 et par une première électrode 51 de largeur réduite.

La figure 4a représente une vue schématique, partielle et de coupe d'une structure lumineuse à diode 600 dans un sixième mode de réalisation de l'invention.

Cette structure lumineuse 600 diffère de la structure 100 sur certains points. L'élément métallique 4 est couvert:
- par un film 91 isolant électrique et conducteur thermique, à base de silicone incluant des charges minérales,
- et par une feuille métallique type cuivre ou graphite 92 par exemple réflecteur optique, en argent ou aluminium.

Cette couverture améliorant encore la gestion des dissipations thermiques est particulièrement adapté pour des diodes de forte puissance et pour des applications à haut niveau d'éclairage (rétroéclairage d'écrans à cristaux liquides par exemple ou lampe architecturale).

Les couches transparentes peuvent être remplacées par des couches semi transparentes (sérigraphiée), par des couches miroir, par exemple en argent.

La figure 4b représente une vue schématique, partielle de face d'une structure lumineuse à diodes dans un septième mode de réalisation de l'invention 700.

La structure lumineuse 700 comprend trois rangées des diodes 5a à 5c respectivement de couleur rouge, verte et bleue (ou de même couleur), et parallèles aux bords longitudinaux. Chaque diode 5a à 5c est dans un trou individuel, par exemple de base carrée ou circulaire et par exemple à profil de rétention. Chaque diode est maintenue par un élément métallique en deux parties de section en L; par exemple similaire à celui décrit pour le premier mode de réalisation.

Chaque rangée de diodes est en alimentée en courant i par une piste à jet d'encre 51'a à 51'c discontinue, ou en variante une couche électroconductrice transparente discontinue ou une couche sérigraphiée discontinue. Les parties métalliques 41', 42' servent pour la connexion électrique avec la piste associée 51'a à 51'c.

Des diodes peuvent être disposées pour former un logo, la piste étant alors modifiée pour maintenir l'alimentation électrique.

La figure 4c représente une vue schématique, partielle de face d'une structure lumineuse à diodes dans un autre mode de réalisation de l'invention 710. La structure lumineuse 710 comprend :
- une pluralité de premières pistes conductrices 51'a à 51'c de préférence à jet d'encre et sensiblement parallèles entre elles, et reliées à une extrémité à un bus bar commun 61 longeant un bord latéral,
- et une pluralité de deuxièmes pistes conductrices 52'a à 52'c sensiblement parallèles, en alternance avec les premières pistes conductrices à un bus bar commun 62 longeant l'autre bord latéral,
- une pluralité de rainures, chacune intercalées entre des première et deuxième pistes formant des première et deuxième électrodes, parallèles à ces pistes de préférence, ces rainures logeant les diodes et des éléments métalliques servant d'éléments de connexion électrique et de maintien.

Chaque diode 3a, 3b 3c est reliée à un élément métallique individuel, en deux parties identiques 41, 42 à profil en L. Chaque rangée peut émettre une couleur donnée.

La structure lumineuse 710 peut servir comme lampe plane décorative ou architecturale.

Les figures 5a et 5b représentent des vues schématiques, partielles et de coupe de structures lumineuses à diodes 800, 810 dans un huitième mode de réalisation de l'invention et dans une variante.

La structure lumineuse 800 comprend une feuille 1 en verre, par exemple épais de 4 ou 6 mm, de préférence d'absorption très faible pour un rayonnement monochromatique dans le visible ou même de plusieurs rayonnements dans le visible. On peut ainsi choisir un verre sodocalcique extraclair.

La feuille 1 est dotée de première et deuxième faces principales parallèles 11, 12 et d'une tranche 13.

La feuille est un guide de lumière, la lumière étant extraite via l'une ou les deux faces principales 11, 12.

Les diodes 3 sont logées dans une rainure pratiquée dans la tranche 13. Chaque diode 3 est encapsulée et est pourvue d'une lentille de focalisation 32. Toutes les teintes sont envisageables. On peut aussi régler la puissance via l'alimentation et/ou utiliser plusieurs couleurs.

Le verre 1 peut comprendre en outre une d'autres rainures logeant des diodes, par exemple sur le bord de la tranche opposé.

Des moyens de pilotage des diodes permettent d'émettre le rayonnement en permanence ou par intermittence, d'une couleur donnée, ou de différentes couleurs ou d'adresser des diodes.

Chaque diode 3 est reliée à un élément métallique. L'élément métallique est de conception simple et mufti-fonctions.

Chaque élément métallique sert de maintien d'une ou plusieurs diodes dans la rainure, sert pour l'alignement optique et sert pour masquer les diodes. Il comprend trois tronçons sensiblement plans et minces:
- deux tronçons principaux 410, 420 sur les faces principales 11, 12,
- et un tronçon latéral 430, en deux parties, et en contact avec le bord 13 d'injection de lumière.

Les deux tronçons principaux 410, 420 sont munis de pattes s'engageant dans des encoches pratiquées sur les faces principales 11, 12.

Chaque tronçon 410, 420, 430 fait en outre office d'élément de connexion électrique entre la diode 3 et les électrodes par exemple en couches électroconductrices transparentes 51, 52 disposées sur les faces principales 11, 12. L'une des électrodes 51, 52 peut être un miroir, par exemple en aluminium ou argent. Le bord opposé peut être métallisé.

La structure 810, montrée en figure 5b, varie de la structure 800 en plusieurs points. L'élément métallique 4 présente une section en « E » et est apte à pincer la tranche 13.

Chaque diode est une simple puce semi-conductrice 31 et à contacts électriques sur des faces opposées et est maintenue par la partie centrale métallique 431 du E.

Les deux faces principales 11, 12 - ou une seule en variante - comprennent une première électrode de type couche électroconductrice transparente 51a, 51b. Le fond 21 de la rainure, large de préférence, comporte une deuxième électrode 52' par exemple sous forme d'une piste jet d'encre collé et/ou en simple contact avec la face émettrice, ou sous forme d'un fil conducteur.

En insérant un grand nombre de diodes, une intensité lumineuse équivalente à celle d'un éclairage incandescent peut être obtenue, tout en nécessitant qu'une consommation plus faible.

Cette structure peut servir par exemple pour un éclairage décoratif ou de signalisation, par exemple comme panneau ou cloison lumineuse.

L'une des diodes peut être remplacée par une diode servant pour télécommander la structure, en recevant des signaux dans l'infrarouge.

L'une des couches transparentes peut être remplacée par une couche semi transparente (sérigraphiée par exemple), par un miroir, par exemple en argent ou aluminium, ou par une couche opaque colorée (émail...), par exemple pour rendre les diodes invisibles d'un côté de la structure.

Le bord opposé peut être métallisé.

Les figures 6a et 6b représentent des vues schématiques, partielles et de coupe de structures lumineuses à diodes 900, 910 dans un neuvième mode de réalisation de l'invention et dans une variante. La structure 900 diffère de la structure 100 en plusieurs points:
- l'élément métallique est en une pièce (percée pour le remplissage de la matière 7) et de section en forme de T,
- les diodes sont à contacts sur des faces opposées et ne sont pas encapsulées (simples puces conductrices 31),
- la première électrode 51 est en deux parties de part et d'autre de la rainure (ou même d'un seul côté),
- la rainure est large et la deuxième électrode 52' est une piste à jet d'encre (ou un fil conducteur mince) dans le fond 21 de la rainure 2.

Les diodes peuvent former un dessin lumineux, par exemple un logo ou une marque.

En insérant un grand nombre de diodes, une intensité lumineuse équivalente à celle d'un éclairage incandescent peut être obtenue, tout nécessitant une consommation plus faible.

Cette structure peut servir par exemple pour un éclairage décoratif ou de signalisation, par exemple comme panneau ou cloison lumineuse.

L'une des diodes peut être remplacée par une diode servant pour télécommander la structuré, en recevant des signaux dans l'infrarouge.

La structure 910 diffère de la structure 900 en plusieurs points:
- le trou comprend un alésage 22' recouvert de la couche électroconductrice 51 formant la première électrode,
- l'élément métallique 4 comprend un ressort central 43' guidé dans son axe par des parois métalliques 44.

Les figures 7a et 7b représentent des vues schématiques, partielles et de coupe de structures lumineuses à diodes 1000, 1010 dans un dixième mode de réalisation de l'invention et dans une variante. La structure 1000 diffère de la structure 910 en plusieurs points:
- la rainure 2' (ou des trous individuels) présente un profil de rétention, les parois latérales s'évasant latéralement formant ainsi un«<>»,
- l'élément métallique 4" comprend un ou des éléments métalliques 45 de forme sensiblement complémentaire aux parois de la rainure, pour un autoblocage.
- le trou n'est pas alésé.

Les diodes peuvent former un dessin lumineux, par exemple un logo ou une marque.

En insérant un grand nombre de diodes, une intensité lumineuse équivalente à celle d'un éclairage incandescent peut être obtenue, tout en nécessitant une consommation plus faible.

Cette structure peut servir par exemple pour un éclairage décoratif ou de signalisation, par exemple comme panneau ou cloison lumineuse.

L'une des diodes peut être remplacée par une diode servant pour télécommander la structure, en recevant des signaux dans l'infrarouge.

La première électrode 51 peut être remplacée par une couche semi transparente (sérigraphiée), par une couche miroir, par exemple en argent, ou par un réseau à fils et une couche opaque colorée (émail..), par exemple pour rendre les diode invisibles d'un côté de la structure.

La structure 1010 diffère de la structure 1000 en ce que :
- les éléments 45' sont droits,
- la deuxième électrode 52 est une couche électroconductrice transparente comme la première électrode 51,
- un fil d'interconnexion 62' est soudé sur cette deuxième électrode 52.

Un exemple de fabrication de cette structure 1010 est le suivant:
- façonnage du trou 2", éventuellement avec un alésage
- dépôt d'une couche conductrice par CVD, formant, par effet d'ombrage des parois élargies, deux électrodes 51, 52 sur la face principale 11 et le fond du trou,
- placement et soudure du fil d'interconnexion 62' et insertion et collage à l'argent des puces 31 (ou vice versa),
- montage de l'élément métallique commun 4" ou des éléments métalliques individuels.

La structure selon l'invention n'est pas forcément symétrique. On peut utiliser des électrodes en matériau distinct ou de technologie distincte, des organes de connexions en matériau distinct ou de technologie distincte.

Des dispositions mixtes, avec des trous individuels et des trous communs, peuvent être prévues.

Les couches électroconductrices transparentes peuvent être des couches minces conductrices fonctionnelles, notamment métalliques, de préférence en argent, disposées entre des couches diélectriques minces qui sont:
- optionnellement une couche de blocage directement sur la couche en argent à base de métal, alliage métallique oxyde sous stoechiométrique d'un métal, alliage métallique,
- une couche à base d'oxyde métallique par exemple oxyde de zinc éventuellement dopé à l'aluminium et/ou une couche en nitrure de silicium.

## Revendications

1. Structure lumineuse (100, 110, 200, 300, 310, 400, 410, 500, 510, 600, 700, 710, 800, 810, 900, 910, 1000, 1010) comportant :
- au moins une diode électroluminescente (3, 3', 3a à 3c), apte à émettre un rayonnement compris dans l'ultraviolet, dit UV, et/ou le visible,
- un élément verrier (1) sensiblement plan présentant des faces principales (11, 12) et une tranche (13), l'élément verrier comprenant un trou (2, 2', 2") logeant la diode,
- un élément métallique (4, 4', 4", 450) relié à la diode,
ledit élément métallique étant en outre choisi parmi un élément de connexion électrique (4, 4', 4") et/ou un élément de maintien (4, 4', 4", 450) de la diode dans ledit trou **caractérisé en ce que** ledit élément métallique est couplé avec ledit élément verrier pour une évacuation de la chaleur.

2. Structure lumineuse (310) selon la revendication 1 **caractérisée en ce que** l'élément métallique (450) est en contact direct avec au moins l'une des faces principales et/ou avec la tranche et/ou avec la paroi latérale formant le trou.

3. Structure lumineuse (100, 110, 200, 300, 400, 410, 500, 510, 600, 700, 710, 800, 810, 900, 910, 1000, 1010) selon l'une des revendications précédentes **caractérisée en ce qu'**un élément fonctionnel à couche(s) et/ou à fil(s), notamment une électrode (51, 51', 51", 52, 52', 52"), un organe d'alimentation électrique (51'a à 51'c), un miroir, un décor, est intercalé entre l'élément verrier (1) et l'élément métallique (4, 4', 4").

4. Structure lumineuse (100, 110, 200, 300, 310, 400, 410, 500, 510, 600, 700, 710, 800, 810, 900, 910, 1000, 1010) selon l'une des revendications précédentes **caractérisée en ce que** l'élément métallique (4, 4', 4", 450) est intégré dans le trou ou affleure du trou.

5. Structure lumineuse (100, 110, 200, 300, 310, 400, 410, 500, 510, 600, 700, 710, 800, 810, 900, 910, 1000, 1010) selon l'une des revendications précédentes **caractérisée en ce que** l'élément métallique (4, 4', 4", 450) est une pièce avec une section en T, en E ou en L ou une pièce en deux parties (41, 42, 451, 452) de section en L, la ou les pièces étant de préférence d'épaisseur inférieure ou égale à 0,2 mm.

6. Structure lumineuse (1000, 1010) selon l'une des revendications précédentes **caractérisée en ce que** l'élément métallique qui est un élément de maintien (4") est auto bloquant dans le trou (2") choisi à profil de rétention.

7. Structure lumineuse (910, 1000, 1010) selon l'une des revendications précédentes **caractérisée en ce que** l'élément métallique qui est de maintien comprend un ressort (43') en contact avec la diode (3).

8. Structure lumineuse (800, 810) selon l'une des revendications précédentes **caractérisée en ce que,** lorsque le trou est dans la tranche (13), l'élément métallique (4) qui est de maintien comprend trois tronçons sensiblement plans :
- deux tronçons principaux (410, 420) en contact avec les faces principales,
- et un tronçon latéral (420, 430) en contact avec un bord de la tranche, ledit élément de maintien étant apte à pincer la tranche ou les deux tronçons principaux étant munis de pattes s'engageant dans des encoches pratiquées sur les faces principales.

9. Structure lumineuse (600) selon l'une des revendications précédentes **caractérisée en ce que** l'élément métallique (4) est couvert par un élément isolant électrique (91) et conducteur thermique, de préférence à base de silicone incluant des charges minérales, cet élément isolant électrique étant disposé sous une feuille métallique (92).

10. Structure lumineuse (900, 910, 1000, 1010) selon l'une des revendications précédentes **caractérisée en ce que** le trou (2") est de largeur supérieure ou égale 2 mm .

11. Structure lumineuse (300, 310, 910) selon l'une des revendications précédentes **caractérisée en ce que** le trou est alésé pour recevoir l'élément métallique et de préférence une ou des électrodes et/ou un organe d'alimentation électrique.

12. Structure lumineuse (100, 110, 200, 300, 310, 400, 410, 500, 510, 600, 700, 710, 800, 810, 900, 910, 1000, 1010) selon l'une des revendications précédentes **caractérisée en ce qu'**elle comprend une pluralité de diodes alimentées en courant (700) ou en tension.

13. Structure lumineuse (100, 110, 200, 300, 400, 410, 500, 510, 600, 710, 800, 810, 900, 910, 1000, 1010) selon l'une des revendications précédentes **caractérisée en ce qu'**elle comprend des première et deuxième électrodes (5, 5', 5", 51, 51', 51", 52, 52', 52"), éventuellement en contact avec l'élément métallique, respectivement disposées sur une même face principale, ou sur les deux faces principales, et/ou dans le fond du trou (2) et en dehors du trou.

14. Structure lumineuse (100, 110, 200, 300, 400, 410, 500, 510, 600, 710, 800, 810, 900, 910, 1000, 1010) selon la revendication 13 **caractérisée en ce qu'**au moins l'une des première et deuxième électrodes est choisie parmi un réseau conducteur notamment de transparence globale ou une couche conductrice (5, 5', 5", 51, 51', 52, 52') notamment transparente, éventuellement recouverte d'une ou de couches diélectriques minces et/ou fuiteuses.

15. Structure lumineuse (100, 200, 300, 400, 500, 700, 710, 810, 900, 910, 1000) selon l'une des revendications précédentes **caractérisée en ce qu'**elle comprend au moins une électrode et/ou un organe d'alimentation électrique qui est une piste jet d'encre (5', 51', 51'a à 51'c) avec des (nano)particules métalliques ou qui est sérigraphié(e) (61 à 62').

16. Structure lumineuse (100, 110, 200, 300, 310, 400, 410, 500, 510, 600, 700, 710, 800, 810, 900, 910, 1000, 1010) selon l'une des revendications précédentes, **caractérisée en ce que** la diode (3, 3') est choisie par l'une ou les diodes suivantes :
- une diode avec des contacts électriques sur les faces opposées de la puce (31) ou sur une même face de la puce ou une diode à émission latérale,
- une diode avec une lentille de focalisation (32) ou une diode comprenant une puce sans encapsulation,
- une diode dont la direction principale d'émission est perpendiculaire ou oblique ou une diode présentant deux directions principales d'émission obliques par rapport la face émettrice de la puce donnant une forme d'aile de chauve souris ou une diode présentant uniquement deux directions principales d'émission obliques,
- une diode disposée pour un guidage dans la tranche, ou pour une émission directement par l'une ou les faces ou par le trou.

17. Structure lumineuse (100, 110, 200, 300, 310, 400, 410, 500, 510, 600, 700, 710, 800, 810, 900, 910, 1000, 1010) selon l'une des revendications précédentes **caractérisée en ce qu'**elle comprend une pluralité de diodes (3, 3') et des moyens de pilotage des diodes pour émettre le rayonnement soit en permanence, soit par intermittence, d'une couleur donnée, ou de différentes couleurs, ou d'adresser individuellement des diodes.

18. Structure lumineuse (400, 410, 500) selon l'une des revendications précédentes **caractérisée en ce qu'**elle est mobile pour former une porte verrière, et **en ce que** la structure comprend une pluralité de diodes (3, 3a à 3c) alignées dans le trou formant une rainure et formée dans la face principale dotée de première et deuxième électrodes (51, 52,52"), et des moyens de pilotage des diodes pour émettre le rayonnement par intermittence en fonction de la position de la porte, par rupture d'alimentation électrique.

19. Structure lumineuse (710) selon l'une des revendications précédentes **caractérisée en ce qu'**elle comprend :
- une pluralité de premières pistes conductrices, de préférence sensiblement parallèles, pistes reliées à un organe d'alimentation électrique commun,
- et une pluralité de deuxièmes pistes conductrices, de préférence sensiblement parallèles, pistes en alternance avec les premières pistes conductrices et alimentées par un autre organe d'alimentation électrique commun,
- une pluralité de trous, de préférence formant rainures, chacun intercalés entre des première et deuxième pistes formant des première et deuxième électrodes, les trous logeant des diodes et des éléments métalliques servant d'éléments de connexion électrique et de préférence de maintien.

20. Structure lumineuse (100, 110, 200, 300, 310, 400, 410, 500, 510, 600, 700, 710, 800, 810, 900, 910, 1000, 1010) selon l'une des revendications précédentes **caractérisée en ce que** l'élément verrier est en verre silico sodocalcique, de préférence clair ou extraclair.

21. Structure lumineuse (100, 200, 300, 310, 510, 600, 700, 710, 800, 810, 900, 910, 1000, 1010) selon l'une des revendications précédentes **caractérisée en ce qu'**au moins un bord de la tranche qui n'est pas un bord de couplage du rayonnement à l'intérieur du guide est réflecteur, de préférence métallisé.

22. Structure lumineuse (200, 310) selon l'une des revendications précédentes **caractérisée en ce qu'**elle comprend une couche diffusante minérale (70) associée à l'une des faces principales qui est une face lumineuse.

23. Structure lumineuse (100, 110, 200, 300, 400, 410, 500, 510, 600, 700, 710, 800, 810, 900, 910, 1000, 1010) selon l'une des revendications précédentes **caractérisée en ce que** le guide est monolithique pour former une structure monolithique et de préférence un vitrage simple.

24. Structure lumineuse (310) selon l'une des revendications 1 à 23 **caractérisée en ce que** la structure comprend un vitrage feuilleté formé dudit guide minéral choisi feuille de verre, d'un intercalaire de feuilletage choisi diffusant, et d'un contre verre éventuellement avec une face principale externe diffusante.

25. Structure lumineuse (100, 110, 200, 300, 310, 400, 410, 500, 510, 600, 700, 710, 800, 810, 900, 910, 1000, 1010) selon l'une des revendications précédentes, **caractérisée en ce qu'**elle forme un vitrage éclairant, décoratif, architectural, de signalisation.

26. Application de la structure lumineuse (100, 110, 200, 300, 310, 400, 410,, 500, 510, 600, 700, 710, 800, 810, 900, 910, 1000, 1010) selon l'une des revendications précédentes à une structure, notamment un vitrage, destinée au bâtiment, telle qu'une fenêtre éclairante ou une façade de bâtiment ou un vitrage structurel, à une porte verrière sécurisée, notamment coulissante, à un véhicule de transport, tel que lunette arrière, vitre latérale ou de toit d'automobile, à tout autre véhicule terrestre, aquatique ou aérien, au mobilier urbain tel qu'abribus, panneau de signalisation ou publicitaire, une balustrade, un présentoir, une vitrine, un élément d'étagère, à l'éclairage routier ou urbain, à un aquarium, une vitrine, une serre, à l'ameublement intérieur, en particulier de cuisine ou de salle de bains, comme cloison, un miroir, à un écran de système d'affichage du type ordinateur, télévision, téléphone, à un système électrocomandable, à un dispositif de rétroéclairage d'un écran à cristaux liquides, pour la photothérapie, à une structure intégrée dans un équipement électroménager, comme une tablette de réfrigérateur, tablette de cuisine.

27. Procédé de fabrication de la structure lumineuse à diode (1010) selon l'une des revendications précédentes comprenant les étapes suivantes:
- façonnage du trou (2, 2', 2"),
- dépôt d'une couche conductrice formant deux électrodes (51, 52) sur l'une des faces principales (11),

28. Procédé de fabrication de la structure lumineuse selon la revendication 27 **caractérisé en ce qu'**il comprend une étape de trempe de l'élément verrier.

29. Procédé de fabrication de la structure lumineuse selon l'une des revendications 27 à 28 **caractérisé en ce que** le façonnage confère un profil de rétention au trou (2").

30. Procédé de fabrication de la structure lumineuse selon l'une des revendications 27 à 29 **caractérisé en ce que** le façonnage du trou comprend un alésage (22) pour recevoir ledit élément métallique.

## Claims

1. A luminous structure (100, 110, 200, 300, 310, 400, 410, 500, 510, 600, 700, 710, 800, 810, 900, 910, 1000, 1010) comprising:
- at least one light-emitting diode (3, 3', 3a to 3c) capable of emitting radiation within the ultraviolet (UV) and/or the visible;
- a substantially planar glass element (1) having main faces (11, 12) and an edge (13), the glass element having a hole (2, 2', 2") housing the diode; and
- a metallic element (4, 4', 4", 450) connected to the diode,
said metallic element being furthermore chosen from an electrical connection element (4, 4', 4") and/or a holding element (4, 4', 4", 450) for keeping the diode in said hole **characterized in that** said metallic element (4, 4', 4", 450) is coupled with said glass element for removing heat.

2. The luminous structure (310) as claimed in claim 1, **characterized in that** the metallic element (450) is in direct contact with at least one of the main faces and/or with the edge and/or with the side wall forming the hole.

3. The luminous structure (100, 110, 200, 300, 310, 400, 410, 500, 510, 600, 700, 710, 800, 810, 900, 910, 1000, 1010) as claimed in either of the preceding claims, **characterized in that** a functional element having one or more layers and/or one or more wires, especially an electrode (51, 51', 51", 52, 52', 52"), a power supply member (51'a to 51'c), a mirror or a decoration, is inserted between the glass element (1) and the metallic element (4, 4', 4").

4. The luminous structure (100, 110, 200, 300, 310, 400, 410, 500, 510, 600, 700, 710, 800, 810, 900, 910, 1000, 1010) as claimed in one of the preceding claims, **characterized in that** the metallic element (4, 4', 4", 450) is incorporated into the hole or flush with the hole.

5. The luminous structure (100, 110, 200, 300, 310, 400, 410, 500, 510, 600, 700, 710, 800, 810, 900, 910, 1000, 1010) as claimed in one of the preceding claims, **characterized in that** the metallic element (4, 4', 4", 450) is a piece with a T-shaped, E-shaped or L-shaped cross section or a two-part piece (41, 42, 451, 452) of L-shaped cross section, the piece or pieces preferably having a thickness of 0.2 mm or less.

6. The luminous structure (1000, 1010) as claimed in one of the preceding claims, **characterized in that** the metallic element, which is a holding element (4"), is self-blocking in the chosen hole (2") having a retaining profile.

7. The luminous structure (910, 1000, 1010) as claimed in one of the preceding claims, **characterized in that** the metallic element, which is a holding element, comprises a spring (43') in contact with the diode (3).

8. The luminous structure (800, 810) as claimed in one of the preceding claims, **characterized in that,** when the hole is in the edge (13), the metallic element (4) which is a holding element comprises three substantially planar portions:
- two main portions (410, 420) in contact with the main faces; and
- a side portion (420, 430) in contact with part of the edge, said holding element being capable of gripping the edge or the two main portions being provided with tabs that engage in notches made on the main faces.

9. The luminous structure (600) as claimed in one of the preceding claims, **characterized in that** the metallic element (4) is covered by an electrically insulating and thermally conducting element (91), preferably based on a silicone that includes mineral fillers, this electrically insulating element being placed beneath a metal foil (92).

10. The luminous structure (900, 910, 1000, 1010) as claimed in one of the preceding claims, **characterized in that** the hole (2") has a width of 2 mm or more.

11. The luminous structure (300, 310, 910) as claimed in one of the preceding claims, **characterized in that** the hole is bored so as to receive the metallic element and preferably one or more electrodes and/or a power supply member.

12. The luminous structure (100, 110, 200, 300, 310, 400, 410, 500, 510, 600, 700, 710, 800, 810, 900, 910, 1000, 1010) as claimed in one of the preceding claims, **characterized in that** it comprises a plurality of diodes (700) supplied with current or with voltage.

13. The luminous structure (100, 110, 200, 300, 310, 400, 410, 500, 510, 600, 710, 800, 810, 900, 910, 1000, 1010) as claimed in one of the preceding claims, **characterized in that** it comprises first and second electrodes (5, 5', 5", 51, 51', 51", 52, 52', 52") optionally in contact with the metallic element, placed respectively on one and the same main face, or on both main faces, and/or in the bottom of the hole (2) and outside the hole.

14. The luminous structure (100, 110, 200, 300, 310, 400, 410, 500, 510, 600, 710, 800, 810, 900, 910, 1000, 1010) as claimed in claim 13, **characterized in that** at least one of the first and second electrodes is chosen from a conducting array, especially one having overall transparency, or a conducting, especially transparent, layer (5, 5', 5", 51, 51', 52, 52') optionally covered with one or more thin and/or leaky dielectric layers.

15. The luminous structure (100, 200, 300, 400, 500, 700, 710, 810, 900, 910, 1000) as claimed in one of the preceding claims, **characterized in that** it comprises at least one electrode and/or a power supply member which is an ink jet track (5', 51', 51'a to 51'c) with metal (nano)particles or which is screen-printed (61 to 62').

16. The luminous structure (100, 110, 200, 300, 310, 400, 410, 500, 510, 600, 700, 710, 800, 810, 900, 910, 1000, 1010) as claimed in one of the preceding claims, **characterized in that** the diode (3, 3') is chosen from one or more of the following diodes:
- a diode with electrical contacts on the opposed faces of the chip (31) or on one and the same face of the chip or a side-emitting diode;
- a diode with a focusing lens (32) or a diode comprising an unencapsulated chip;
- a diode whose main emission direction is perpendicular or oblique, or a diode having two main emission directions that are oblique with respect to the emitting face of the chip, giving a batwing shape, or a diode having only two oblique main emission directions; and
- a diode placed for guiding in the edge or for direct emission via one or both faces or via the hole.

17. The luminous structure (100, 110, 200, 300, 310, 400, 410, 500, 510, 600, 700, 710, 800, 810, 900, 910, 1000, 1010) as claimed in one of the preceding claims, **characterized in that** it comprises a plurality of diodes (3, 3') and means for driving the diode so as to emit the radiation either permanently or intermittently, with a given color or different colors, or for individually addressing the diodes.

18. The luminous structure (400, 410, 500) as claimed in one of the preceding claims, **characterized in that** it is movable, so as to form a glass door, and **in that** the structure comprises a plurality of diodes (3, 3a to 3c) aligned in the hole forming a groove and formed in the main face provided with the first and second electrodes (51, 52, 52"), and means for driving the diodes so as to emit the radiation intermittently, depending on the position of the door, by a break in the power supply.

19. The luminous structure (710) as claimed in one of the preceding claims, **characterized in that** it comprises:
- a plurality of first conducting, preferably approximately parallel, tracks connected to a common power supply member;
- a plurality of second conducting, preferably substantially parallel, tracks alternating with the first conducting tracks and supplied via another common power supply member; and
- a plurality of holes, preferably forming grooves, each inserted between first and second tracks forming first and second electrodes, the holes housing diodes and metallic elements serving as electrical connection and preferably holding elements.

20. The luminous structure (100, 110, 200, 300, 310, 400, 410, 500, 510, 600, 700, 710, 800, 810, 900, 910, 1000, 1010) as claimed in one of the preceding claims, **characterized in that** the glass element is made of a soda-lime-silica glass, preferably a clear or extra-clear one.

21. The luminous structure (100, 200, 300, 310, 510, 600, 700, 710, 800, 810, 900, 910, 1000, 1010) as claimed in one of the preceding claims, **characterized in that** at least one edge part, which is not a part for coupling the radiation inside the guide, is reflecting, preferably metallized.

22. The luminous structure (200, 310) as claimed in one of the preceding claims, **characterized in that** it comprises a mineral diffusing layer (70) associated with one of the main faces, which is a luminous face.

23. The luminous structure (100, 110, 200, 300, 400, 410, 500, 510, 600, 700, 710, 800, 810, 900, 910, 1000, 1010) as claimed in one of the preceding claims, **characterized in that** the lightguide is monolithic so as to form a monolithic structure and preferably a simple glazing unit.

24. The luminous structure (310) as claimed in one of claims 1 to 23, **characterized in that** the structure comprises a laminated glazing unit formed from said chosen mineral guide, glass sheet, diffusing chosen lamination interlayer and a glass back pane optionally with a diffusing external main face.

25. The luminous structure (100, 110, 200, 300, 310, 400, 410, 500, 510, 600, 700, 710, 800, 810, 900, 910, 1000, 1010) as claimed in one of the preceding claims, **characterized in that** it forms illuminating, decorative, architectural or indicating glazing.

26. An application of the luminous structure (100, 110, 200, 300, 310, 400, 410, 500, 510, 600, 700, 710, 800, 810, 900, 910, 1000, 1010) as claimed in one of the preceding claims to a structure, especially glazing, intended for buildings, such as an illuminating window or a building wall or structural glazing, to a secure glass door, especially a sliding door, to a transport vehicle, such as an automobile rear window, side window or roof, to any other terrestrial, aquatic or airborne vehicle, to urban furniture, such as a bus shelter, an indicating or advertising panel or a balustrade, to a display cabinet, a shop window or a shelf element, to road or urban lighting, to an aquarium, a shop window or a greenhouse, to interior furnishings, in particular for a kitchen or bathroom, such as a partition or a mirror, to a display screen of the computer, television or telephone type, to an electrically controllable system, to a backlighting device for a liquid crystal display, for phototherapy, to a structure integrated into domestic electrical equipment, such as a refrigerator shelf or kitchen worktop.

27. A process for manufacturing the luminous structure (1010) having a diode as claimed in one of the preceding claims, comprising the following steps:
- machining of the hole (2, 2', 2"); and
- deposition of a conducting layer forming two electrodes (51, 52) on one (11) of the main faces.

28. The process for manufacturing the luminous structure as claimed in claim 27, **characterized in that** it includes a step of toughening the glass element.

29. The process for manufacturing the luminous structure as claimed in either of claims 27 and 28, **characterized in that** the cutting gives the hole (2") a retaining profile.

30. The process for manufacturing the luminous structure as claimed in one of claims 27 to 29, **characterized in that** the cutting of the hole results in a bore (22) for housing said metallic element.

## Patentansprüche

1. Leuchtstruktur (100, 110, 200, 300, 310, 400, 410, 500, 510, 600, 700, 710, 800, 810, 900, 910, 1000, 1010), die:
- mindestens eine Leuchtdiode (3, 3', 3a bis 3c), die in der Lage ist, eine Strahlung, die im Ultraviolett, UV, und/oder im sichtbaren Bereich enthalten ist, abzustrahlen,
- ein im Wesentlichen ebenes Glaselement (1), das Hauptflächen (11, 12) und eine Schmalseite (13) aufweist, wobei das Glaselement ein die Diode aufnehmendes Loch (2, 2', 2") enthält, und
- ein Metallelement (4, 4', 4", 450), das mit der Diode verbunden ist, umfasst,
wobei das Metallelement außerdem aus einem elektrischen Anschlusselement (4, 4', 4") und/oder einem Element (4, 4', 4", 450) für das Halten der Diode in dem Loch ausgewählt ist, **dadurch gekennzeichnet, dass** dieses Metallelement, um die Wärme abzuführen, mit dem Glaselement gekoppelt ist.

2. Leuchtstruktur (310) nach Anspruch 1, **dadurch gekennzeichnet, dass** das Metallelement (450) sich in direktem Kontakt mit mindestens einer der Hauptflächen und/oder mit der Schmalseite und/oder mit der das Loch bildenden Seitenwand befindet.

3. Leuchtstruktur (100, 110, 200, 300, 400, 410, 500, 510, 600, 700, 710, 800, 810, 900, 910, 1000, 1010) nach einem der vorhergehenden Ansprüche, **dadurch gekennzeichnet, dass** zwischen das Glaselement (1) und das Metallelement (4, 4', 4") ein Funktionselement mit einer oder mehreren Schichten und/oder einem oder mehreren Drähten, insbesondere eine Elektrode (51, 51', 51", 52, 52', 52"), ein elektrisches Versorgungsorgan (51'a bis 51'c), ein Spiegel und eine Verzierung, eingefügt ist.

4. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** das Metallelement (4, 4', 4", 450) in das Loch integriert ist oder mit diesem bündig abschließt.

5. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** das Metallelement (4, 4', 4", 450) ein Bauteil mit T-, E- oder L-förmigem Querschnitt oder ein aus zwei Teilen (41, 42, 451, 452) bestehendes Bauteil mit L-förmigem Querschnitt ist, wobei die Dicke des/der Bauteile/s vorzugsweise weniger als oder gleich 0,2 mm beträgt.

6. Leuchtstruktur (1000, 1010) nach einem der vorhergehenden Ansprüche, **dadurch gekennzeichnet, dass** das Metallelement, das ein Halteelement (4") ist, in dem mit einem Halteprofil gewählten Loch (2") selbstarretierend ist.

7. Leuchtstruktur (910, 1000, 1010) nach einem der vorhergehenden Ansprüche, **dadurch gekennzeichnet, dass** das Metallelement, das ein Halteelement ist, eine mit der Diode (3) in Kontakt befindliche Feder (43') umfasst.

8. Leuchtstruktur (800, 810) nach einem der vorhergehenden Ansprüche, **dadurch gekennzeichnet, dass,** wenn sich das Loch in der Schmalseite (13) befindet, das Metallelement (4), das ein Halteelement ist, drei im Wesentlichen ebene Abschnitte:
- zwei Hauptabschnitte (410, 420), die sich mit den Hauptflächen in Kontakt befinden, und
- einen seitlichen Abschnitt (420, 430), der sich mit einem Rand der Schmalseite in Kontakt befindet,
umfasst, wobei das Halteelement in der Lage ist, die Schmalseite zu erfassen, oder die zwei Hauptabschnitte mit Klemmen versehen sind, die in in den Hauptflächen angebrachte Aussparungen eingreifen.

9. Leuchtstruktur (600) nach einem der vorhergehenden Ansprüche, **dadurch gekennzeichnet, dass** das Metallelement (4) mit einem Element (91), das elektrisch isolierend und wärmeleitend und vorzugsweise auf der Basis von eine anorganische Füllung enthaltendem Silicon ist, bedeckt ist, wobei dieses elektrische Isolierelement unter einer Metallfolie (92) angeordnet ist.

10. Leuchtstruktur (900, 910, 1000, 1010) nach einem der vorhergehenden Ansprüche, **dadurch gekennzeichnet, dass** die Breite des Lochs (2") mehr als oder gleich 2 mm beträgt.

11. Leuchtstruktur (300, 310, 910) nach einem der vorhergehenden Ansprüche, **dadurch gekennzeichnet, dass** das Loch mit einer Bohrung versehen ist, um das Metallelement und vorzugsweise eine oder mehrere Elektroden und/oder ein elektrisches Versorgungsorgan aufzunehmen.

12. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** sie mehrere mit Strom (700) oder Spannung versorgte Dioden umfasst.

13. Leuchtstruktur (100, 110, 200, 300, 400, 410, 500, 510, 600, 710, 800, 810, 900, 910, 1000, 1010) nach einem der vorhergehenden Ansprüche, **dadurch gekennzeichnet, dass** sie gegebenenfalls mit dem Metallelement in Kontakt befindliche erste und zweite Elektroden (5, 5', 5", 51, 51', 51 ", 52, 52', 52") umfasst, die jeweils auf ein und derselben Hauptfläche oder auf beiden Hauptflächen und/oder im Boden des Lochs (2) und außerhalb des Lochs angeordnet sind.

14. Leuchtstruktur (100, 110, 200, 300, 400, 410, 500, 510, 600, 710, 800, 810, 900, 910, 1000, 1010) nach Anspruch 13, **dadurch gekennzeichnet, dass** mindestens eine von ersten und zweiten Elektroden aus einem insbesondere insgesamt transparenten Leitungsnetz oder einer insbesondere transparenden leitfähigen Schicht (5, 5', 5", 51, 51', 52, 52'), die gegebenenfalls mit einer oder mehreren dünnen und/oder verschwindenden dielektrischen Schichten überzogen ist, ausgewählt ist.

15. Leuchtstruktur (100, 200, 300, 400, 500, 700, 710, 810, 900, 910, 1000) nach einem der vorhergehenden Ansprüche, **dadurch gekennzeichnet, dass** sie mindestens eine Elektrode und/oder ein elektrisches Versorgungsorgan, die/das eine durch einen Tintenstrahl gebildete Bahn (5', 51', 51'a bis 51'c) mit metallischen (Nano-)Teilchen oder durch Siebdruck (61 bis 62') aufgebracht ist/sind, umfasst.

16. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** die Diode (3, 3') aus einer oder mehreren der folgenden Dioden:
- einer Diode mit elektrischen Kontakten auf den einander gegenüberliegenden Seiten des Chips (31) bzw. auf ein und derselben Seite des Chips oder einer Diode mit seitlicher Emission,
- einer Diode mit einer Fokussierlinse (32) oder einer Diode, die einen Chip ohne Umkapselung umfasst,
- einer Diode, deren hauptsächliche Emissionsrichtung senkrecht oder schräg ist, oder einer Diode, die in Bezug auf die emittierende Seite des Chips, der die Form eines Fledermausflügels verleiht, zwei schräge hauptsächliche Emissionsrichtungen aufweist, oder einer Diode, die ausschließlich zwei schräge hauptsächliche Emissionsrichtungen aufweist, und
- einer Diode, die für eine Führung in der Schmalseite oder für eine Emission direkt durch eine oder mehrere Seiten bzw. das Loch angeordnet ist,
ausgewählt ist.

17. Leuchtstruktur (100, 110, 200, 300, 310,400,410, 500, 510, 600, 700, 710, 800, 810, 900, 910, 1000, 1010) nach einem der vorhergehenden Ansprüche, **dadurch gekennzeichnet, dass** sie mehrere Dioden (3, 3') und Mittel zu deren Regelung, um entweder ununterbrochen oder unterbrochen eine Strahlung mit einer gegebenen Farbe bzw. mit verschiedenen Farben zu emittieren oder die Dioden einzeln anzusteuern, umfasst.

18. Leuchtstruktur (400, 410, 500) nach einem der vorhergehenden Ansprüche, **dadurch gekennzeichnet, dass** sie beweglich ist, um eine Glastür zu bilden, **und dass** die Struktur mehrere Dioden (3, 3a bis 3c), die in dem Loch ausgerichtet sind, das eine Nut bildet, die in der Hauptfläche, die mit ersten und zweiten Elektroden (51, 52, 52") versehen ist, ausgebildet ist, und Mittel zur Regelung der Dioden, um die intermittierende Strahlung in Abhängigkeit von der Stellung der Tür durch Unterbrechung der Stromversorgung zu emittieren, umfasst.

19. Leuchtstruktur (710) nach einem der vorhergehenden Ansprüche, **dadurch** - **gekennzeichnet, dass** sie:
- eine Vielzahl von vorzugsweise im Wesentlichen parallelen ersten Leiterbahnen, die an ein gemeinsames elektrisches Versorgungsmittel angeschlossen sind,
- eine Vielzahl von vorzugsweise im Wesentlichen parallelen zweiten Leiterbahnen, die sich mit den ersten Leiterbahnen abwechseln und von einem anderen gemeinsamen elektrischen Versorgungsorgan versorgt werden, und
- eine Vielzahl von vorzugsweise Nuten bildenden Löchern, die jeweils zwischen ersten und zweiten Leiterbahnen, die erste und zweite Elektroden bilden, angebracht sind, wobei die Löcher Dioden und Metallelemente, die als elektrische Anschlusselemente und vorzugsweise als Halteelemente dienen, aufnehmen,
umfasst.

20. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** das Glaselement aus Kalk-Natron-Silicatglas besteht und vorzugsweise ein Klar- oder Extraklarglas ist.

21. Leuchtstruktur (100, 200, 300, 310, 510, 600, 700, 710, 800, 810, 900, 910, 1000, 1010) nach einem der vorhergehenden Ansprüche, **dadurch gekennzeichnet, dass** mindestens ein Rand der Schmalseite, der kein Rand für die Kopplung der Strahlung mit dem Inneren der Führung ist, reflektierend und vorzugsweise metallisiert ist.

22. Leuchtstruktur (200, 310) nach einem der vorhergehenden Ansprüche, **dadurch gekennzeichnet, dass** sie eine anorganische Diffusionsschicht (70) umfasst, die mit einer der Hauptflächen verbunden ist, die eine Leuchtfläche ist.

23. Leuchtstruktur (100, 110, 200, 300, 400, 410, 500, 510, 600, 700, 710, 800, 810, 900, 910, 1000, 1010) nach einem der vorhergehenden Ansprüche, **dadurch gekennzeichnet, dass** die Führung monolithisch ist, um eine monolithische Struktur und vorzugsweise ein einfaches Glas zu bilden.

24. Leuchtstruktur (310) nach einem der Ansprüche 1 bis 23, **dadurch gekennzeichnet, dass** die Struktur ein Verbundglas umfasst, das aus der anorganischen Führung gebildet ist, die aus einer Glasscheibe, einer lichtstreuend gewählten Zwischenscheibe des Verbundglases und einem Gegenglas, gegebenenfalls mit einer lichtstreuenden äußeren Hauptfläche, ausgewählt ist.

25. Leuchtstruktur (100, 110, 200, 300, 310, 400, 410, 500, 510, 600, 700, 710, 800, 810, 900, 910, 1000, 1010) nach einem der vorhergehenden Ansprüche, **dadurch gekennzeichnet, dass** sie ein leuchtendes, dekoratives, architektonisches und zeichengebendes Glas bildet.

26. Verwendung der Leuchtstruktur (100, 110, 200, 300, 310, 400, 410, 500, 510, 600, 700, 710, 800, 810, 900, 910, 1000, 1010) nach einem der vorhergehenden Ansprüche für eine Struktur, insbesondere ein Glas, das für ein Gebäude vorgesehen ist, wie ein Leuchtfenster, eine Gebäudefassade, ein Strukturglas und eine Sicherheitsglastür, insbesondere eine Sicherheits-Glasschiebetür, ein Transportfahrzeug als Heckscheibe, Seitenfenster oder Autodach, ein beliebiges anderes Boden-, Wasser- oder Luftfahrzeug, Stadtmobiliar wie Buswartehäuschen, Anzeige- oder Werbetafel, Geländer, Verkaufsmöbel, Vitrine, Regalelement, Straßen- oder Stadtbeleuchtung, Aquarium, Vitrine, Gewächshaus, Innenraummöbel, insbesondere Küchen- oder Badmöbel, als Trennwand und Spiegel, einen Bildschirm eines Anzeigesystems wie eines Computers, Fernsehers und Telephons, ein elektrisch steuerbares System, eine rückseitige Beleuchtungseinrichtung eines Flüssigkristallbildschirms, die Phototherapie und eine in ein Haushaltgerät integrierte Struktur wie einen Einlegeboden eines Kühlschranks und eines Küchenschranks.

27. Verfahren zur Herstellung der Diodenleuchtstruktur (1010) nach einem der vorhergehenden Ansprüche, das die Stufen:
- Bearbeiten des Lochs (2, 2', 2") und
- Aufbringen einer zwei Elektroden (51, 52) bildenden leitfähigen Schicht auf eine der Hauptflächen (11)
umfasst.

28. Verfahren zur Herstellung der Leuchtstruktur nach Anspruch 27, **dadurch gekennzeichnet, dass** es eine Stufe zum Vorspannen des Glaselements umfasst.

29. Verfahren zur Herstellung der Leuchtstruktur nach Anspruch 27 oder 28, **dadurch gekennzeichnet, dass** dem Loch (2") durch die Bearbeitung ein Halteprofil verliehen wird.

30. Verfahren zur Herstellung der Leuchtstruktur nach einem der Ansprüche 27 bis 29, **dadurch gekennzeichnet, dass** die Bearbeitung des Lochs eine Bohrung (22) umfasst, um das Metallelement aufzunehmen.
